# EUROPÄISCHE PATENTSCHRIFT

(11) **EP 3 521 512 B1**
(45) Veröffentlichungstag und Bekanntmachung des Hinweises auf die Patenterteilung: **12.08.2020**
(21) Anmeldenummer: 19161313.2
(22) Anmeldetag: 03.09.2014
(51) Int. Cl.: E01B 25/34, B60L 13/00, B60L 13/10, B65G 47/64, B65G 54/02

(54) **VORRICHTUNG UND VERFAHREN ZUM SCHALTEN EINER PASSIVEN WEICHE FÜR TRANSPORTSYSTEME MIT LINEARMOTOREN**
DEVICE AND METHOD FOR SWITCHING PASSIVE POINTS FOR TRANSPORT SYSTEMS WITH LINEAR MOTORS
PROCÉDÉ ET DISPOSITIF DE COMMUTATION D'UN AIGUILLAGE PASSIF POUR SYSTÈME DE TRANSPORT COMPRENANT DES MOTEURS LINÉAIRES

(30) Priorität: 13.09.2013 DE 102013218389
(43) Veröffentlichungstag der Anmeldung: 07.08.2019
(62) Teilanmeldung aus: 17184620.7
(73) Patentinhaber: KRONES Aktiengesellschaft, 93073 Neutraubling (DE)
(72) Erfinder: Josefowitz, Mareike, 93073 Neutraubling (DE); Prinz, Markus, 93073 Neutraubling (DE); Elsperger, Stefan, 93073 Neutraubling (DE); Kieslinger, Manfred, 93073 Neutraubling (DE); Senn, Konrad, 93073 Neutraubling (DE)
(74) Vertreter: Grünecker Patent- und Rechtsanwälte PartG mbB

(56) Entgegenhaltungen:
- EP-A1- 2 471 728
- DE-A1- 1 963 505

## Beschreibung

### Gebiet der Erfindung

Die vorliegende Erfindung betrifft eine Vorrichtung und ein Verfahren zum Schalten von passiven Weichen für Transportsysteme mit Linearmotoren, insbesondere für Transporteinrichtungen zum individuellen Behältertransport in einer Behälterbehandlungsanlage.

### Stand der Technik

Transportsysteme mit Linearmotorantrieb sind im Stand der Technik wohl bekannt. Prominentestes Beispiel sind Personenschnellzüge auf der Basis von Magnetschwebetechnik. Transportsysteme mit Linearmotorantrieb werden jedoch auch in vielen Bereichen der Industrie, insbesondere zum individuellen Transport von Stückgut innerhalb von Produktionslinien eingesetzt.

Allen Transportsystemen mit Linearmotorantrieb ist jedoch gemein, dass speziell dazu ausgebildete Transportelemente über magnetische Wechselwirkung mit dem oder den Langstatoren eines oder mehrerer Linearmotoren entlang einer oder mehrerer Führungsschienen bewegt werden. Da sowohl die Langstatoren als auch die Führungsschienen entlang der gesamten Transportbahn angeordnet sein müssen, gestaltet sich der Einbau von Verzweigungen in Form von Weichen in Transportsysteme mit Linearmotoren im Allgemeinen als relativ umständlich und aufwändig. Im Stand der Technik sind beispielsweise aktive Weichen bekannt, bei welchen ein gesamter Abschnitt der Transportbahn inklusive Führungsschiene und/oder Langstator zum Schalten mechanisch bewegt werden muss. Um beim Schalten weniger Masse bewegen zu müssen und die Schaltzeit der Weiche zu verkürzen, sind weiterhin Weichen bekannt, bei welchen analog zum Bewegen von Weichenzungen bei Eisenbahnweichen durch mechanisches Bewegen eines speziell dazu ausgebildeten Schaltelements ein gezieltes Leiten des in die Weiche eintretenden Transportelements in eine gewünschte Richtung erreicht wird. Besonders bei Transportsystemen mit außenliegenden, doppelten Linearmotoren sind solche aktiven Weichen jedoch schwer zu realisieren und haben zudem lange Schaltzeiten aufgrund der zu bewegenden Massen der mechanisch bewegten Bauteile. Ein hoher Durchsatz an Transportelementen pro Zeiteinheit, so wie es z. B. bei Transporteinrichtungen von Behälterbehandlungsanlagen erforderlich ist, ist somit nicht möglich. Darüber hinaus unterliegen aktive Weichen aufgrund ihrer mechanischen Schaltelemente einem hohen Verschleiß und einer erhöhten Fehleranfälligkeit.

Die Offenlegungsschrift DE 1963505 lehrt eine Vorrichtung zur Auswahl einer Bahn an der Stelle einer Abzweigung, die ein magnetisches Feld erzeugt, das gleichzeitig den Antrieb und die Auswahl der Bahn des Fahrzeuges gewährleistet. Die Induktoren des Linearmotors liefern somit gleichzeitig Antriebs- und Führungskräfte für den Förderwagen. Zur Auswahl der Bahn werden einseitig die Induktoren abgeschaltet, um eine Anziehungskraft zwischen diesen Induktoren und seitlich angeordneten, ferromagnetischen Flanschen der Vorrichtung aufzuheben.

Die europäische Patentanmeldung EP 2 471 728 A1 lehrt ein Transportmodul mit einer Vielzahl unabhängig voneinander beweglicher und steuerbarer Transporteinheiten zur gesteuerten Förderung und Verteilung von Behältern. Zur Verteilung der Behälter werden diese mit einer optischen Erfassungseinrichtung erfasst.

Es liegt somit der vorliegenden Erfindung die Aufgabe zugrunde, eine Vorrichtung und ein Verfahren zum dynamischen Schalten einer Weiche in einem Transportsystem mit Linearmotorantrieb, insbesondere in einer Transporteinrichtung zum Transport von Behältern in einer Behälterbehandlungsanlage, zur Verfügung zu stellen, welches einen hohen Durchsatz an Transportelementen pro Zeiteinheit ermöglicht und somit die oben genannten Nachteile überwindet. Ganz allgemein liegt der vorliegenden Erfindung die Aufgabe zugrunde, die Kosten für die Installation und den Betrieb einer Weiche einer Transporteinrichtung zum individuellen Transport von Stückgut mit einer Vielzahl von einzeln steuerbaren Transportelementen zu reduzieren.

### Beschreibung der Erfindung

Die oben genannte Aufgabe wird gelöst durch eine Transporteinrichtung gemäß Anspruch 1, ein Verfahren gemäß Anspruch 10 und eine Verwendung eines Transportelements gemäß Anspruch 15. Bevorzugte Weiterbildungen sind Gegenstand der abhängigen Ansprüche.

Bei der Transporteinrichtung kann es sich insbesondere um eine Transporteinrichtung zum Transport von Behältern in einer Behälterbehandlungsanlage handeln. Zu diesem Zweck kann die Transporteinrichtung eine Vielzahl von Transportelementen zum Transportieren eines oder mehrerer Behälter aufweisen, wobei die Vielzahl der Transportelemente bewegbar an der Transportbahn der Transporteinrichtung angeordnet ist. Die Anzahl der Transportelemente an der Transportbahn ist dabei prinzipiell beliebig und lediglich durch die Länge der Transportbahn begrenzt, solange nur mindestens ein Transportelement vorhanden ist. Zur Aufnahme mindestens eines Behälters an einer Aufnahmestelle und zur Abgabe der Behälter an einer Abgabestelle können die Transportelemente mit einer geeigneten Haltevorrichtung, z. B. in Form eines Greifelements, ausgestattet sein. Das Greifelement kann dabei passiv oder aktiv steuerbar ausgebildet sein. Insbesondere sind Greifelemente zum formschlüssigen oder kraftschlüssigen Greifen eines Halsbereichs der Behälter, z. B. beim sog. Neckhandling von Kunststoffflaschen vorstellbar, wobei der gehaltene Behälter beim formschlüssigen Greifen um seine Längsachse drehbar in dem Greifelement gelagert ist. Zudem kann das Greifelement schwenkbar und/oder höhenverstellbar ausgebildet sein.

Behälter sind insbesondere Getränkeflaschen, aber auch andere Behälter für Lebensmittel, Medikamente, Hygieneartikel, Reinigungsmittel oder dergleichen, wie z. B. Dosen, Glasflaschen oder andere Glasbehälter mit Deckel, Verpackungen auf der Basis von Karton oder Verbundstoffen, Tetrapack oder Ähnliches. Ebenso sind bei Behältern aus Kunststoff auch Zwischenprodukte, insbesondere Vorformlinge zum Streckblasen der Behälter vorstellbar. Des Weiteren sind unter Behältern auch zusammengestellte Gebinde mit mehreren Behältern zu verstehen.

Das mindestens eine Transportelement kann als Läufer, Puck, Schlitten, Shuttle oder dergleichen ausgebildet sein, welches erfindungsgemäß durch Wechselwirkung mit dem ersten und/oder zweiten Linearmotorstrang der Transportbahn entlang der Transportbahn bewegt wird. Jedes Transportelement kann dabei je nach Bedarf an der Transportbahn beschleunigt, abgebremst, mit konstanter Geschwindigkeit bewegt oder auch zeitweise ganz angehalten werden. Durch individuelles Steuern der Transportelemente lässt sich somit ein variables Weg-Zeit-Profil jedes einzelnen Transportelements realisieren. Jedes Transportelement weist eine eindeutige Identifikationseinheit, z. B. in Form eines Strichcodes, auslesbaren Speicherchips, eines aufgedruckten, aufgeklebten und/oder eingravierten alphanumerischen Codes etc., auf, wobei durch eine oder mehrere geeignete Identifikationserfassungsvorrichtungen entlang der Transportbahn stromaufwärts der mindestens einen passiven Weiche eine Identifikation des Transportelements, welches die entsprechende Identifikationserfassungsvorrichtung passiert, ermöglicht wird. Die Identifikationseinheit des Transportelements kann insbesondere zum gezielten Leiten des Transportelements, z. B. in Richtung der ersten oder der zweiten divergierenden Nebenbahn der Transportbahn, durch entsprechendes automatisches Schalten der passiven Weiche eingesetzt werden.

Die Form der Transportbahn ist grundsätzlich beliebig. Insbesondere kann die Transportbahn im Wesentlichen geschlossen sein, wobei im Wesentlichen geschlossen bedeutet, dass die Transportbahn mindestens einen geschlossenen Weg für die Transportelemente ermöglicht. Darüber hinaus kann die Transportbahn durch Einfügen einer oder mehrerer passiver Weichen beliebig viele Verzweigungen aufweisen, wobei je nach Orientierung der jeweiligen passiven Weiche und nach Bewegungsrichtung der Transportelemente im Bereich der Weiche ein Verzweigen einer Hauptbahn der Transportbahn in erste und zweite divergierende Nebenbahnen bzw. ein Zusammenführen einer ersten und einer zweiten Nebenbahn zu einer Hauptbahn der Transportbahn ermöglicht wird.

Erfindungsgemäß umfasst die Transportbahn eine erste Führungsschiene und eine zweite Führungsschiene, wobei die zweite Führungsschiene der ersten Führungsschiene im Bereich der Hauptbahn gegenüberliegt. Die Anordnung der ersten und zweiten Führungsschiene im Bereich der Hauptbahn entspricht damit der bekannten Parallelführung von Führungsschienen in Doppelschienensystemen, wie z. B. bei Eisenbahngleisen. Im Bereich der passiven Weiche divergieren die erste und die zweite Führungsschiene jedoch, um in ihrer Fortführung die rechte bzw. linke Führungsschiene der ersten bzw. zweiten divergierenden Nebenbahn zu bilden. An der Weichenspitze setzen dabei die komplementären Führungsschienen der ersten und zweiten divergierenden Nebenbahnen an, welche benötigt werden, um die Doppelschienenstruktur der ersten bzw. zweiten divergierenden Nebenbahn zu komplettieren. Somit weisen auch die erste und zweite Nebenbahn jeweils ein Paar parallel geführter Führungsschienen auf, von welchen jeweils eine Führungsschiene durch die erste bzw. zweite Führungsschiene der Hauptbahn gegeben ist.

Analog umfasst die Transportbahn einen ersten, parallel zur ersten Führungsschiene angeordneten Linearmotorstrang und einen zweiten, parallel zur zweiten Führungsschiene angeordneten Linearmotorstrang, wobei an der Weichenspitze zwei weitere komplementäre Linearmotorstränge ansetzten, welche zur Komplettierung des doppelsträngigen Linearantriebs der ersten bzw. zweiten Nebenbahn benötigt werden.

Die Form und der Querschnitt der Führungsschienen sind dabei beliebig und lediglich durch die Ausführung des Transportelements sowie der Lagerelemente des Transportelements, mit welchen das Transportelement bewegbar an den Führungsschienen gelagert ist, bestimmt. Z. B. kann jede Führungsschiene einen Führungskanal, in welchem ein Führungsstift des Transportelements geführt wird, und/oder einen Spurkranz aufweisen, auf welchem eine oder mehrere geeignet angeordnete Führungsrollen des Transportelements abrollen. Eine Vielzahl alternativer Ausführungsformen, z. B. mittels eines Gleitlagers, ist hier vorstellbar. Durch das Bereitstellen der ersten und zweiten Führungsschiene an der Transportbahn kann ein reibungsarmes Gleiten der Transportelemente entlang der Transportbahn ermöglicht werden. Darüber hinaus kann die Transportbahn über eine Lauffläche verfügen, auf welcher entsprechende Stützelemente, z. B. Stützrollen, abrollen bzw. gleiten können. Führungskanäle, Spurkränze, Laufflächen oder ähnliche Elemente, welche eine Richtungsänderung des Transportelements beim Abzweigen im Bereich der passiven Weiche behindern könnten, können im Bereich der passiven Weiche unterbrochen sein.

Der erste und der zweite Linearmotorstrang sind erfindungsgemäß als Langstatoren von, insbesondere synchronen, Linearmotoren ausgebildet. In einer alternativen Ausführung können der erste und zweite Linearmotorstrang auch als asynchrone Linearmotoren ausgebildet sein, wobei der mindestens eine Permanentmagnet und/oder nicht schaltende Elektromagnet des Reaktionselements des Transportelements und/oder ein elektrisch leitendes Element des Transportelements, z. B. in Form einer metallischen Platte, an welcher der Permanentmagnet und/oder nicht schaltende Elektromagnet angebracht sind, als elektrische Leiter für die Induktion durch die asynchronen Linearmotoren fungieren.

Erfindungsgemäß findet der Vortrieb des Transportelements entlang der Transportbahn durch Wechselwirkung des mindestens einen Permanentmagneten und/oder nicht schaltenden Elektromagneten des Reaktionselements des Transportelements mit dem ersten und/oder zweiten Linearmotorstrang statt. Hierzu ist das Reaktionselement des Transportelements derart angeordnet, dass es im Bereich der Hauptbahn in eine Lücke zwischen dem ersten und dem zweiten Linearmotorstrang eingreift. Beim Bewegen des Transportelements entlang der Hauptbahn bewegt sich somit dessen Reaktionselement in der Lücke zwischen der ersten und der zweiten Führungsschiene entlang dem ersten und dem zweiten Linearmotorstrang. Im Bereich der Nebenbahnen greift das Reaktionselement entsprechend in eine Lücke zwischen den beiden sich gegenüberliegenden Linearmotorsträngen. Das Reaktionselement eines Transportelements bezeichnet hier und im Folgenden die Untereinheit des Transportelements, auf welche durch Wechselwirkung mit entsprechenden Wechselwirkungselementen der Transportbahn, hier mit den Linearmotorsträngen, eine Kraft zum Bewegen des Transportelements ausgeübt wird.

Der erste und der zweite Linearmotorstrang können in einer besonders einfachen Ausführung durch eine Vielzahl entlang des jeweiligen Stranges angeordneter elektrischer Wicklungen in Form von einzeln oder blockweise ansteuerbaren Elektromagneten gebildet werden. Hierbei sind auch komplexere Ausführungen, z. B. mittels einer Halbachanordnung der Elektromagnete zur Verstärkung des magnetischen Flusses auf der dem Reaktionselement zugewandten Seite, denkbar. Erfindungsgemäß ist das Transportelement als passives Transportelement ausgebildet, welches über ein Reaktionselement mit mindestens einem Permanentmagneten und/oder nicht schaltenden Elektromagneten durch Wechselwirkung mit den von den einzeln ansteuerbaren Elektromagneten des ersten und/oder zweiten Linearmotors erzeugten elektromagnetischen Wechselfeldern bewegt wird. Ein nicht schaltender Elektromagnet ist dabei derart mit einer Stromversorgung und/oder einer Regeleinheit der Transporteinrichtung verbunden, dass er stets in derselben Richtung von einem, vorzugsweise regelbaren, elektrischen Strom durchflossen wird.

In einer einfachen Ausführung können der mindestens eine Permanentmagnet und/oder nicht schaltende Elektromagnet quer zur Transportbahn gerichtet an dem Reaktionselement des Transportelements angeordnet sein, sodass einer der magnetischen Pole des Permanentmagneten und/oder nicht schaltenden Elektromagneten mit dem ersten Linearmotorstrang wechselwirken kann, während der andere magnetische Pol mit dem zweiten Linearmotorstrang wechselwirken kann. Alternativ können die dem ersten Linearmotorstrang und dem zweiten Linearmotorstrang zugewandten Seiten des Reaktionselements jedoch auch separate Permanentmagnete und/oder nicht schaltende Elektromagnete aufweisen, welche insbesondere in Halbachanordnung zur Verstärkung des magnetischen Flusses in Richtung des jeweiligen Linearmotorstrangs ausgebildet sein können. In diesem Fall sind die Permanentmagnete und/oder nicht schaltenden Elektromagnete in der Ebene angeordnet, deren Normale den ersten und den zweiten Linearmotorstrang senkrecht verbindet. Eine Versorgung des mindestens einen nicht schaltenden Elektromagneten des Reaktionselements des Transportelements mit der benötigten elektrischen Energie kann über eine entlang der Transportbahn angeordnete elektrische Leitung oder Leistungsversorgungsschiene und über elektrische Kontakte des Transportelements, z. B. über Leistungssammelschuhe, erreicht werden. Alternativ ist eine Übertragung der benötigten elektrischen Energie via Induktion denkbar.

Das mindestens eine Transportelement kann mittels einer Steuer- und/oder Regeleinheit, z. B. in Form eines Prozessrechners, entlang der Transportbahn geführt werden. Die Steuer- und/oder Regeleinheit kann dabei als eine zentrale Steuer- und/oder Regeleinheit der Transporteinrichtung und/oder durch dezentral an den Transportelementen angeordnete Steuer- und/oder Regeleinheiten realisiert werden. Des Weiteren können die eine oder mehrere Steuer- und/oder Regeleinheiten als speicherprogrammierbare Steuereinheit(en) SPS ausgebildet sein. Durch gezieltes Ansteuern einzelner Elektromagnete bzw. einzelner Blöcke von Elektromagneten des ersten und/oder zweiten Linearmotorstrangs in einem begrenzten Bereich der Transportbahn kann ein bestimmtes Transportelement gezielt beschleunigt und somit bewegt werden, sodass das Transportelement einzeln und unabhängig von anderen Transportelementen der Vielzahl von Transportelementen der Transporteinrichtung entlang der Transportbahn geleitet werden kann. Dabei erfolgt das Ansteuern der Elektromagnete des ersten und zweiten Linearmotorstrangs mittels der Steuer- und/oder Regeleinheit der Transporteinrichtung. Insbesondere kann die Stromstärke durch die elektrischen Wicklungen der Elektromagnete des ersten und zweiten Linearmotorstrangs einzeln von der Steuer- und/oder Regeleinheit in Abhängigkeit von einem Kraftbedarf des zu bewegenden Transportelements automatisch geregelt werden. Durch individuelles Steuern und/oder Regeln der Stromstärke durch einzelne Wicklungen der Linearmotorstränge kann das Transportelement beschleunigt, abgebremst oder mit einer konstanten vorgegebenen Geschwindigkeit bewegt werden.

Das mindestens eine Transportelement kann, je nach Ausbildung der ersten und zweiten Führungsschiene, des Reaktionselements und/oder des ersten und zweiten Linearmotorstrangs, vollständig magnetisch oder teilweise magnetisch und teilweise mechanisch oder vollständig mechanisch an der Transportbahn gelagert sein. Bei vollständig magnetischer Lagerung ist die Transportbahn als Magnetschwebebahn ausgebildet, wobei die magnetische Wechselwirkung zwischen dem Reaktionselement des Transportelements und dem ersten und/oder zweiten Linearenmotorstrang eine magnetische Levitation des Transportelements zwischen der ersten und der zweiten Führungsschiene bewirkt. In diesem Fall dienen die erste und zweite Führungsschiene lediglich als Halter bei ausgeschaltetem Linearantrieb bzw. als Begrenzer, um ein Ausbrechen des Transportelements aus der Transportbahn zu verhindern. Durch magnetische Levitation lässt sich die Reibung zwischen dem Transportelement und der Transportbahn auf ein Minimum reduzieren. Bei teilweise magnetischer und teilweise mechanischer Lagerung kann das Transportelement zusätzlich ein oder mehrere Stützelemente, z. B. in Form von Stützrollen und/oder Führungsrollen, welche auf der ersten bzw. zweiten Führungsschiene abrollen, aufweisen. Ebenso ist eine teilweise oder vollständig mechanische Lagerung mittels mindestens eines Gleitlagers denkbar. Besonders kostengünstig ist eine Ausführung der Lagerung der Transportelemente mittels Gleitlager, welche mit der ersten bzw. zweiten Führungsschiene in Kontakt stehen. Zusätzliche Stützelemente bzw. Gleitlager können dabei auf einer zusätzlichen Lauffläche der Transportbahn rollen bzw. gleiten. Bei vollständig mechanischer Lagerung kann das Transportelement ausschließlich durch die beschriebenen Stützelemente bzw. Gleitlager gelagert sein. Vorteilhafterweise können verwendete Stützelemente, Stützrollen bzw. Gleitlager symmetrisch bezüglich der ersten und zweiten Führungsschiene an dem Transportelement angeordnet sein. Ergänzend oder alternativ hierzu kann eine Lagerung auch pneumatisch erfolgen, wobei die Transportbahn als Luftschwebebahn ausgeführt ist. Bei pneumatischer Lagerung ergibt sich, wie auch bei vollständig magnetischer Lagerung, eine Minimierung der Reibung zwischen dem Transportelement und der Transportbahn.

Zum individuellen Steuern des Transportelements entlang der Transportbahn kann durch regelmäßige und periodische Anordnung von Sensoren entlang zumindest eines Abschnitts der Transportbahn die Position des Transportelements auf diesem Abschnitt der Transportbahn bestimmt werden. Dabei können die Sensoren als optischer Sensor, elektrischer Sensor, elektromagnetischer Sensor oder mechanischer Sensor ausgebildet sein, wobei z. B. durch Messen einer Lichtreflektion an einem Reflektorelement des Transportelements, durch Induktion eines elektromagnetischen Signals aufgrund der Bewebung des Transportelements, durch Änderungen des elektrischen Widerstandes des Sensors unter Ausnutzung eines magnetoresistiven Effektes, z. B. aufgrund des magnetischen Flusses eines magnetischen Referenzelements, insbesondere eines Permanentmagneten, oder des Reaktionselements des Transportelements, oder durch lokale Druckmessung aufgrund des Gewichts des Transportelements die Position des Transportelements im Bereich des Sensors bestimmt werden kann.

Ein elektromagnetischer Sensor kann dabei auch als Hallsensor ausgebildet sein, welcher auch dann ein Signal liefert, wenn das Magnetfeld, in dem er sich befindet, konstant ist. Ebenso ergibt sich bei der Ausführung eines elektromagnetischen Sensors als Magnetfeldsensor auf der Grundlage magnetoresistiver Effekte, wie des anisotropen magnetoresistiven Effekts (AMR-Effekt), des "gigantischen" magnetoresistiven Effekts (GMR-Effekt), sowie weiterer magnetoresistiver Effekte wie des CMR-Effekts und des TMR-Effekts, eine Änderung des elektrischen Widerstandes, welche abhängig von dem zu messenden Magnetfeld ist. Sowohl Hallsensoren als auch magnetoresistive Sensoren erlauben somit das Bestimmen der Position des Transportelements entlang der Transportbahn auch ohne induktive Effekte, d. h. auch bei stillstehendem Transportelement. Dabei detektiert der entsprechende Sensor eine lokale Veränderung des Hintergrundmagnetfelds durch das Reaktionselement, insbesondere durch einen daran angebrachten Permanent- bzw. Elektromagneten, des Transportelements. Alternativ oder zusätzlich kann das Transportelement eine Signaleinheit aufweisen, welche ein oder mehrere Positionssignale, die von räumlich getrennten Signaleinheiten der Steuer- und/oder Regeleinheit der Transporteinrichtung gesendet werden, detektiert, um daraus, z. B. durch Laufzeitmessungen, die Position des Transportelements entlang der Transportbahn zustimmen. Diese Signaleinheit des Transportelements kann insbesondere als RFID-Chip ausgebildet sein.

Mittels der Vielzahl von entlang der Transportbahn angeordneten Sensoren kann eine Steuer- und/oder Regeleinheit der Transporteinrichtung insbesondere die Position eines Transportelements im Zulauf zu der passiven Weiche bestimmen. Dabei kann mittels der Steuer- und/oder Regeleinheit ein Schalten der passiven Weiche zu dem Zeitpunkt erfolgen, bei welchem das Transportelement einen vorgegebenen Abstand von dem Verzweigungspunkt der Weiche erreicht hat. Zusätzlich wird mittels einer im Zulauf der passiven Weiche angeordneten Identifikationserfassungsvorrichtung eine entsprechende Identifikationseinheit des Transportelements erfasst, um das Transportelement im Zulauf zu der passiven Weiche zu identifizieren. Somit können einzelne Transportelemente gezielt durch entsprechendes Schalten der passiven Weiche der ersten oder der zweiten divergierenden Nebenbahn zugeführt werden. Auf diese Weise lässt sich mittels der Steuer- und/oder Regeleinheit ein Aufteilen des Stroms von Transportelementen an der passiven Weiche realisieren.

Erfindungsgemäß sind die erste und die zweite Führungsschiene, insbesondere im Bereich der passiven Weiche, feststehend. Dies bedeutet, dass weder die Führungsschienen noch Teile der Führungsschienen beim Schalten der passiven Weiche bewegt werden. Im Gegensatz zu aktiven Weichen, bei welchen das Schalten der Weiche durch mechanisches Bewegen zumindest von Teilen der Führungsschienen realisiert wird, weist eine passive Weiche keine solchen bewegten Teile der Führungsschienen auf. Da somit zum Schalten der Weiche keine, insbesondere schweren, Teile der Führungsschienen bewegt werden müssen, lässt sich die Schaltzeit der Weiche erheblich reduzieren, wodurch sich ein geringerer Abstand der Transportelemente im Zulauf der passiven Weiche realisieren lässt. Da bei Behälterbehandlungsanlagen im Allgemeinen eine große Zahl von Behältern mittels der Vielzahl von Transportelemente transportiert werden, lässt sich durch Verwenden einer passiven Weiche der vorliegenden Erfindung der Durchsatz der Transporteinrichtung, und somit der Behälterbehandlungsanlage steigern. Darüber hinaus unterliegt eine passive Weiche einem geringeren Verschleiß als eine aktive Weiche mit mechanisch bewegten Führungsschienen.

Gemäß einer Weiterbildung können der erste und der zweite Linearmotorstrang eine ferromagnetische Komponente, insbesondere in Form eines Eisenkerns, im Verzweigungsbereich der passiven Weiche aufweisen. Der Verzweigungsbereich einer passiven Weiche kann hierbei als der Bereich der Weiche zwischen dem Punkt, an dem die entlang der Hauptbahn parallel geführte erste und zweite Führungsschiene zu divergieren beginnen, und den beiden Verbindungslinien, welche die Weichenspitze, d. h. den Punkt, an dem die komplementären Führungsschienen der ersten und zweiten divergierenden Nebenbahnen ansetzen, senkrecht mit der ersten bzw. zweiten Führungsschiene verbinden, definiert werden. Alternativ kann der Verzweigungsbereich der passiven Weiche als der Bereich zwischen dem beschriebenen Punkt einsetzender Divergenz der ersten und zweiten Führungsschiene und den der Weichenspitze nächstliegenden Stellen der ersten und zweiten Nebenbahnen definiert werden, an welchen die Krümmung der ersten bzw. zweiten Führungsschiene Null ist. Aufgrund der unvermeidbaren Krümmung der ersten und/oder zweiten Führungsschiene im Verzweigungsbereich der passiven Weiche können beim Leiten des Transportelements in Richtung der ersten bzw. zweiten Nebenbahn geschwindigkeitsabhängig teils erhebliche Fliehkräfte auftreten. Erfindungsgemäß werden diese Fliehkräfte durch die magnetische Anziehungskraft zwischen dem Permanentmagneten und/oder nicht schaltenden Elektromagneten des Reaktionselements des Transportelements und der ferromagnetischen Komponente des jeweiligen, zur Nebenbahn, entlang welcher das Transportelement geleitet werden soll, gehörenden Linearmotorstrangs kompensiert. Die ferromagnetische Komponente des ersten und des zweiten Linearmotorstrangs kann dabei wie beschrieben in Form eines Eisenkerns der Elektromagnete des jeweiligen Linearmotorstrangs oder auch durch ein separates ferromagnetisches Element, z. B. ein ferromagnetisches Trägerelement des Linearmotorstrangs, realisiert werden. Bei Bewegung des Transportelements außerhalb des Verzweigungsbereichs der passiven Weiche heben sich, durch die bevorzugt symmetrische Anordnung von Permanentmagneten und/oder nicht schaltenden Elektromagneten des Reaktionselements bezüglich des ersten und zweiten Linearmotorstrangs, die seitlich wirkenden Anziehungskräfte zwischen Reaktionselement und Linearmotorsträngen gegenseitig auf, wobei die symmetrischen Anziehungskräfte weiterhin dazu beitragen, das Transportelement zwischen der ersten und zweiten Führungsschiene zu halten.

Gemäß einer weiteren Weiterbildung können der Permanentmagnet und/oder nicht schaltende Elektromagnet derart ausgestaltet sein, dass eine magnetische Anziehungskraft zwischen dem Permanentmagneten und/oder nicht schaltenden Elektromagneten und dem ersten und/oder zweiten Linearmotorstrang dazu geeignet ist, das, insbesondere mit einer vorgegebenen Nutzlast beladene, Transportelement im Verzweigungsbereich der passiven Weiche in einer von der ersten und zweiten Führungsschiene gebildeten Ebene zu halten. Eine von dem Transportelement mitgeführte vorgegebene Nutzlast ist abhängig vom Einsatz des Transportsystems. Bei Transporteinrichtungen, welche zum Transport von Behältern in Behälterbehandlungsanlagen, insbesondere zum Behandeln von Kunststoffflaschen, vorgesehen sind, kann die vorgegebene Nutzlast für unbefüllte Behälter maximal 100 g betragen und für befüllte Behälter maximal 2,5 kg betragen. Gemäß der vorliegenden Weiterbildung ist die Stärke des oder der Permanentmagneten und/oder des oder der nicht schaltenden Elektromagneten derart gewählt, dass das Transportelement aufgrund der magnetischen Anziehungskraft zwischen den Magneten des Reaktionselements und dem, insbesondere mit einer ferromagnetischen Komponente ausgestatteten, Linearmotorstrang auf der Seite der Nebenbahn, in deren Richtung das Transportelement geleitet werden soll, an der zu dem entsprechenden Linearmotorstrang gehörenden Führungsschiene gehalten werden kann.

Bei Eintritt in den Verzweigungsbereich der passiven Weiche muss zum Leiten des Transportelements in Richtung einer der beiden Nebenbahnen ein Kontakt des Transportelements, insbesondere mittels eines oder mehrerer Lagerelemente, mit der nicht zur Nebenbahn führenden Führungsschiene unterbrochen werden. Je nach Lagerung des Transportelements an der ersten und zweiten Führungsschiene kann dazu ein Führungselement, wie z.B. ein Führungskanal, eine Führungsrille, eine Führungskante, ein Führungskranz oder ähnliches im Verzweigungsbereich der passiven Weiche sowohl an der ersten als auch an der zweiten Führungsschiene unterbrochen sein. Damit das Transportelement dennoch stabil entlang der entsprechenden zur Zielnebenbahn führenden Führungsschiene geführt werden kann, ist die magnetische Anziehungskraft zwischen dem oder den Magneten des Reaktionselements und dem entlang der Führungsschiene angeordneten Linearmotorstrangs erfindungsgemäß entsprechend dimensioniert.

Bei Verwendung mindestens eines Permanentenmagneten an dem Reaktionselement des Transportelements kann ein stabiles Halten des Transportelements an der zur Zielnebenbahn führenden Führungsschiene auch bei ausgeschalteten Linearmotorsträngen, z.B. nach Abfahren der Transporteinrichtung bzw. bei Stromausfall, garantiert werden. Durch Anordnen mindestens eines nicht schaltenden Elektromagneten an dem Reaktionselement des Transportelements hingegen kann die zur stabilen Führung benötigte magnetische Anziehungskraft mittels der Steuer- und/oder Regeleinheit der Transporteinrichtung automatisch einem Beladungszustand des Transportelements, welcher z.B. anhand der Identifikationseinheit des Transportelements eindeutig bestimmt ist, durch Regeln der Stromstärke durch den mindestens einen nicht schaltenden Elektromagneten angepasst werden. Es versteht sich, dass das hier und im Folgenden beschriebene Schaltverhalten der passiven Weiche, welches in Bezug auf das Leiten eines entlang der Hauptbahn zur Weiche geführten Transportelements in Richtung der ersten oder zweiten Nebenbahn beschrieben ist, entsprechend auch für das umgekehrte Leiten eines entlang der ersten oder zweiten Nebenbahn zur Weiche geführten Transportelements in Richtung der Hauptbahn anwendbar ist. Die zum Schalten der passiven Weiche benötigten Elemente und Prozesse sind hierbei unabhängig davon, ob es sich bei der Weiche um eine Verzweigung einer Hauptbahn oder um ein Zusammenführen zweier Nebenbahnen handelt. Mittels entlang der Nebenbahnen angeordneter Sensoren kann ebenfalls bei Annäherung eines Transportelements auf einen vorgegebenen Abstand von der Weichenspitze entlang einer Nebenbahn das Schalten der Weiche eingeleitet werden. Lediglich eine Identifikationserfassungsvorrichtung, die im Zulauf zur Weiche entlang der Hauptbahn vorgesehen ist, erübrigt sich entlang der Nebenbahn. Hingegen muss jedoch mittels der Steuer- und/oder Regeleinheit der Transporteinrichtung vermieden werden, dass zwei Transportelemente zeitgleich aus beiden Nebenbahnen über die passive Weiche in die Hauptbahn geführt werden. Je nach gewünschter Maximalgeschwindigkeit der Transportelemente bei Durchfahrt durch die Weiche und je nach maximaler Krümmung der Führungsschienen im Bereich der Weiche kann der mindestens eine Permanentmagnet mit ausreichend starker Magnetfeldstärke vorgesehen werden und/oder die Stromstärke durch den mindestens einen nicht schaltenden Elektromagneten automatisch geregelt werden.

Gemäß einer speziellen Weiterbildung kann die passive Weiche einen Schalter umfassen, durch welchen zum Schalten der Weiche selektiv eine Stromversorgung des ersten Linearmotorstrangs oder des zweiten Linearmotorstrangs im Verzweigungsbereich der Weiche unterbrochen werden kann. Zu diesem Zwecke können der erste Linearmotorstrang und der zweite Linearmotorstrang im Verzweigungsbereich der Weiche jeweils ein separates Segment aufweisen, welches unabhängig von dem Rest des jeweiligen Linearmotorstrangs mit Strom versorgt werden kann. Erfindungsgemäß können diese Segmente derart über einen Schalter mit einer Stromversorgung der Transporteinrichtung verbunden sein, dass entweder das Segment des ersten Linearmotorstrangs oder das Segment des zweiten Linearmotorstrangs, aber niemals beide gleichzeitig, mit Strom versorgt werden können. Ein Schalten der passiven Weiche zum Führen des Transportelements in Richtung der ersten oder der zweiten Nebenbahn geschieht somit, indem der Schalter entweder die erste Stellung, bei welcher nur das Segment des ersten Linearmotorstrangs mit Strom versorgt wird, oder die zweite Stellung, bei der nur das Segment des zweiten Linearmotorstrangs mit Strom versorgt wird, einnimmt. Bei Abschalten der Stromversorgung des Linearmotorstrangs auf der Seite der ersten Nebenbahn beispielsweise wird der Vortrieb des Transportelements im Verzweigungsbereich nur noch durch den Linearmotorstrang auf der Seite der zweiten Nebenbahn verursacht. Auf der Seite der ersten Nebenbahn wirkt nun nur noch die magnetisch Anziehungskraft zwischen dem mindestens einen Permanentmagneten und/oder nicht schaltenden Elektromagneten des Reaktionselements und dem, insbesondere mit einer ferromagnetischen Komponente versehenen, Linearmotorstrang. Auf der Seite der zweiten Nebenbahn hingegen wirkt zusätzlich zu dieser Anziehungskraft noch die Anziehungskraft zwischen dem bestromten Linearmotorstrang und den Magneten des Reaktionselements. Diese zusätzliche Kraft ist stark genug, um das Transportelement an der Führungsschiene auf der Seite der zweiten Nebenbahn zu halten und dadurch den Richtungswechsel einzuleiten. Beim Trennen des Kontakts des oder der Lagerelemente des Transportelements auf der Seite der ersten Nebenbahn von der dort liegenden Führungsschiene unterstützt die Anziehungskraft der Magnete des Reaktionselements auf die ferromagnetische Komponente des bestromten Linearmotorstrangs die Anziehungskraft des bestromten Linearmotorstrangs auf die Magnete des Reaktionselements, um das Transportelement sicher in der von der ersten und zweiten Führungsschiene gebildeten Ebene zu halten und entlang der Führungsschiene auf der Seite der zweiten Nebenbahn zu führen. Durch Unterbrechen der Stromversorgung des Linearmotorstrangs auf der Seite der zweiten Nebenbahn kann das Transportelement analog in Richtung der ersten Nebenbahn geleitet werden.

Nach Erreichen der ersten bzw. zweiten Nebenbahn und Verlassen des Verzweigungsbereichs der passiven Weiche kann das Transportelement wieder beidseitig geführt werden, indem zu dem bestromten Linearmotorstrang der entsprechende komplementäre Linearmotorstrang auf der gegenüberliegenden Seite der jeweiligen Nebenbahn mit Strom versorgt und mittels der Steuer- und/oder Regeleinheit der Transporteinrichtung zum weiteren Führen des Transportelements entlang der Nebenbahn angesteuert wird. In einer besonders einfachen Weiterbildung können die jeweils entsprechenden Elektromagnete der einander gegenüberliegenden Linearmotorstränge im Bereich der Nebenbahnen wie auch der Hauptbahn derart mit der Stromversorgung und der Steuer- und/oder Regeleinheit der Transporteinrichtung verschaltet sein, dass sie mittels eines gemeinsamen Steuersignals synchron zueinander betrieben werden können. Dadurch heben sich die beidseitigen Anziehungskräfte zwischen Linearmotorsträngen und den Magneten des Reaktionselements in seitlicher Richtung auf, so dass lediglich den Vortrieb und/oder die Lagerung des Transportelements unterstützende Kräfte resultieren.

Mittels des Schalters zum selektiven Unterbrechen der Stromversorgung des ersten oder des zweiten Linearmotorstrangs kann somit gemäß der vorliegenden Erfindung eine passive Weiche realisiert werden, bei welcher zum Schalten keinerlei mechanisch bewegte Bauteile benötigt werden. Eine Schaltzeit der so realisierten passiven Weiche ist somit lediglich durch die Schaltzeit des Schalters, insbesondere durch die Induktivitäten der elektrischen Wicklungen der Linearmotorstränge im Bereich der Weiche, limitiert. Da das Schalten der Weiche mittels der Wechselwirkung der für den Vortrieb genutzten Linearmotorstränge und Magnete des Reaktionselements des Transportelements erfolgt, sind somit zum gezielten Leiten des Transportelements in Richtung der ersten oder zweiten Transportbahn keine zusätzlichen Elektromagnete notwendig. Des Weiteren ist aufgrund des zum Schalten verwendeten Linearmotorstrangs ein gleichmäßiger Vortrieb des Transportelements bei der Weichendurchfahrt möglich.

Gemäß einer alternativen Weiterbildung kann die passive Weiche einen Schalter umfassen, durch welchen zum Schalten der Weiche selektiv eine magnetische Polung des ersten Linearmotorstrangs oder des zweiten Linearmotorstrangs im Verzweigungsbereich der Weiche invertiert werden kann. Bei dieser Weiterbildung können Segmente des ersten Linearmotorstrangs und des zweiten Linearmotorstrangs im Verzweigungsbereich der Weiche unabhängig voneinander betrieben werden. Durch Invertieren der magnetischen Polung eines der beiden Segmente kann die zuvor beschriebene magnetische Anziehungskraft zwischen dem Linearmotorstrang und dem mindestens einen Permanentmagneten und/oder nicht schaltenden Elektromagneten des Reaktionselements des Transportelements in eine, im Allgemeinen gleich große, abstoßende Kraft umgewandelt werden, welche das Transportelement bei Durchfahrt durch den Verzweigungsbereich der Weiche in Richtung der gegenüberliegenden Nebenbahn drückt. Insbesondere kompensiert die so erzeugte abstoßende Kraft einen Teil der Anziehungskraft zwischen den Magneten des Reaktionselements und dem, insbesondere mit einer ferromagnetischen Komponente behafteten, Linearmotorstrang mit invertierter Polung. Durch Invertierung der Polung wird somit die magnetische Wechselwirkung zwischen den sich gegenüberliegenden magnetischen Polen des Linearmotorstrangs und des Reaktionselements umgekehrt, während die Anziehungskraft der Magnete des Reaktionselements auf die ferromagnetische Komponente des gegenüberliegenden Linearmotorstrangs davon unbeeinflusst bleibt.

Alternativ oder ergänzend kann der der Seite der Zielnebenbahn gegenüberliegende Linearmotorstrang mit einem hochfrequenten Wechselfeld belegt werden, welches in einer elektrisch leitenden Komponente, z.B. einer Trägerplatte, des Reaktionselements hochfrequente Wirbelströme induziert, die gemäß der Lenzschen Regel von dem hochfrequenten Wechselfeld des Linearmotorstrangs abgestoßen werden. Vorteilhafterweise handelt es sich bei dem elektrisch leitenden Element um ein nichtferromagnetisches Element, welches z.B. mit Wechselfeldern im Bereich von 50 bis 500 Hz abgestoßen werden kann. Bei Verwendung eines ferromagnetischen, elektrisch leitenden Elements werden im Allgemeinen höherfrequente Wechselfelder benötigt. Die zur Abstoßung verwendeten hochfrequenten Wechselfelder können dabei den niederfrequenten Strömen zum Ansteuern des Linearmotorstrangs überlagert werden. Somit lässt sich ein auf ein elektrisch leitendes Reaktionselement abstoßend wirkendes hochfrequentes Wechselfeld auch vorteilhaft mit der oben beschriebenen Invertierung der magnetischen Polung eines Linearmotorstrangs im Verzweigungsbereich der Weiche kombinieren.

Gemäß einer weiteren Weiterbildung kann der Schalter in einer, insbesondere elektronischen, Steuereinheit der Transporteinrichtung integriert sein. Bei der Steuereinheit kann es sich insbesondere um die oben beschriebene Steuer- und/oder Regeleinheit der Transporteinrichtung handeln. Mittels eines solchen elektronischen Schalters kann die Steuer- und/oder Regeleinheit der Transporteinrichtung somit jedes Transportelement eines Stroms von Transportelementen selbst bei hohem Durchsatz gezielt in Richtung der ersten oder der zweiten Nebenbahn leiten. Somit kann auf einfache Weise eine Aufteilung eines Produktionsstroms erzielt werden, wobei die jeweiligen Transportelemente mittels ihrer Identifikationseinheiten im Zulauf zu der passiven Weiche eindeutig identifiziert und entsprechend in Richtung der ersten oder zweiten Nebenbahn geleitet werden.

Gemäß einer Weiterbildung können der erste und der zweite Linearmotorstrang im Verzweigungsbereich der passiven Weiche derart ausgebildet sein, dass sich gegenüberliegende magnetische Pole des ersten und des zweiten Linearmotorstrangs in Abhängigkeit von einer Ausrichtung des Permanentmagneten und/oder einer Polung des nicht schaltenden Elektromagneten des Transportelements entweder stets gleichphasig oder stets gegenphasig gepolt sind. Sind der oder die Permanentmagnete und/oder der oder die nicht schaltenden Elektromagnete des Reaktionselements des Transportelements so angeordnet und/oder gepolt, dass die sich entsprechenden magnetischen Pole der dem ersten Linearenmotorstrang zugewandten Seite bzw. der dem zweiten Linearenmotorstrang zugewandten Seite des Reaktionselements von gleicher Polung sind, so sind gemäß der vorliegenden Weiterbildung sich gegenüberliegende magnetische Pole des ersten und des zweiten Linearmotorstrangs im Verzweigungsbereich der passiven Weiche stets gegenphasig gepolt. Dadurch wirkt stets auf der einen Seite des Reaktionselements eine magnetische Anziehungskraft zwischen dem dort angeordneten Linearmotorstrang und den magnetischen Polen der Magnete des Reaktionselements dieser Seite, während auf der anderen Seite stets eine abstoßende Kraft zwischen dem dort angeordneten Linearmotorstrang und den magnetischen Polen der Magnete des Reaktionselements auf jener Seite wirkt.

Analog sind gemäß der vorliegenden Weiterbildung sich gegenüberliegende magnetische Pole des ersten und des zweiten Linearmotorstrangs im Verzweigungsbereich der passiven Weiche stets gleichphasig gepolt, falls die sich entsprechenden magnetischen Pole des oder der Magneten auf den beiden Seiten des Reaktionselements unterscheiden.

In Abhängigkeit von der gewählten Anordnung der Magnete an dem Reaktionselement des Transportelements können erfindungsgemäß der erste und der zweite Linearmotorstrang im Verzweigungsbereich der passiven Weich derart mit einer Stromversorgung und/oder einer Steuer- und/oder Regeleinheit der Transporteinrichtung verschaltet sein, dass auf der einen Seite des Reaktionselements stets eine anziehende magnetische Kraft und auf der anderen Seite des Reaktionselements stets eine abstoßende magnetische Kraft im Verzweigungsbereich der Weiche wirkt. Beim Invertieren der magnetischen Polung eines der beiden Linearmotorstränge im Verzweigungsbereich der Weiche mittels der Steuer- und/oder Regeleinheit wird somit automatisch auch die magnetische Polung des anderen Linearmotorstrangs invertiert, wobei auf einfache Weise ein Schalten der passiven Weiche von einer der beiden Nebenbahnen zu der anderen der beiden Nebenbahnen ermöglicht wird. Somit kann die zuvor beschriebene unterstützende abstoßende Wechselwirkung zwischen Reaktionselement und linearem Motorstrang auf der der Zielnebenbahn gegenüberliegenden Seite durch entsprechendes Verschalten des ersten und des zweiten Linearmotorstrangs im Verzweigungsbereich automatisch garantiert werden. Durch eine solche Verschaltung lässt sich somit sowohl das Ansteuern der passiven Weiche vereinfachen als auch deren Fehleranfälligkeit reduzieren.

In einer alternativen oder ergänzenden Weiterbildung kann die passive Weiche in ihrem Verzweigungsbereich einen Bandantrieb aufweisen, wobei das Transportelement eine Kontaktfläche aufweist, welche derart angeordnet ist, dass sie im Verzweigungsbereich der Weiche in Kontakt mit dem Bandantrieb tritt, und wobei der Bandantrieb mindestens ein erstes Band umfasst, welches mittels einer Steuereinheit der Weiche aktiviert werden kann.

Bandantriebe zum Vortrieb von Transportelementen entlang einer Transportbahn sind im Stand der Technik wohl bekannt. Dazu wird im Allgemeinen das Band eines solchen Bandantriebs entweder direkt oder indirekt in Kontakt mit einer Kontaktfläche der Transportelemente gebracht, sodass sich bei aktiviertem, im Allgemeinen umlaufenden, Band eine Kraft auf das Transportelement aufgrund der Reibung zwischen Band und Kontaktfläche ergibt. Erfindungsgemäß weist die passive Weiche einen solchen Bandantrieb mit mindestens einem ersten Band auf, welches mittels einer Steuereinheit der Weiche aktiviert werden kann. Bei der Steuereinheit der Weiche kann es sich wie zuvor beschrieben um die Steuer- und/oder Regeleinheit der Transporteinrichtung handeln. Der Bandantrieb ist hierbei auf den Verzweigungsbereich der Weiche beschränkt. Je nach Ausbildung des Transportelements und insbesondere je nach Anordnung der von dem Transportelement mitgeführten Nutzlast kann die Kontaktfläche des Transportelements im Bereich des Reaktionselements, z. B. an einem unteren Ende des Reaktionselements, oder auch auf der dem Reaktionselement gegenüberliegenden Seite des Transportelements, z. B. in einem oberen Bereich des Transportelements, angeordnet sein. Entsprechend kann der Bandantrieb der passiven Weiche bei horizontaler Anordnung der Weiche unterhalb oder oberhalb der Weiche angeordnet sein.

Gemäß einer weiteren Weiterbildung kann das erste Band derart angeordnet sein, dass es im aktivierten Zustand eine Kraft auf die Kontaktfläche des sich im Verzweigungsbereich befindlichen Transportelements in Richtung der ersten divergierenden Nebenbahn ausübt. Dazu kann das erste Band derart schräg zur Richtung der Hauptbahn angeordnet sein, dass bei Betrieb des Bandes in eine vorgegebene Richtung eine Kraft auf die Kontaktfläche in Richtung der ersten Nebenbahn ausgeübt werden kann. Entsprechend kann der Bandantrieb mindestens ein zweites Band umfassen, welches derart angeordnet ist, dass es im aktivierten Zustand eine Kraft auf die Kontaktfläche in Richtung der zweiten Nebenbahn ausübt. Insbesondere kann der Bandantrieb je eine Gruppe von Bändern umfassen, welche versetzt zueinander entlang der Richtung der jeweiligen Nebenbahn im Verzweigungsbereich der passiven Weiche angeordnet sind. Durch Anordnen mehrerer Bänder in Richtung eine Nebenbahn kann somit durch Aktivieren der Bänder kontinuierlich eine laterale Kraft auf die Kontaktfläche des Transportelements ausgeübt werden, um das Transportelement gezielt in die Richtung der Nebenbahn zu leiten. Dabei können zum Schalten der passiven Weiche alternativ die Bänder der ersten Gruppe oder die Bänder der zweiten Gruppe aktiviert werden, wobei die Aktivierung mittels einer Steuereinheit der Weiche erfolgen kann. Die Bänder der jeweiligen Gruppe können hierbei im einfachsten Fall senkrecht zur entsprechenden Führungsschiene angeordnet sein, um eine maximale Auslenkung des Transportelements aufgrund der auf die Kontaktfläche ausgeübten Kraft zu erzielen. Je nach Anordnung und Ausdehnung der Kontaktfläche können die einzelnen Bänder mit einer geringen Länge, z. B. von 2 bis 5 cm, ausgebildet werden.

Gemäß einer weiteren Weiterbildung kann die ausgeübte Kraft einen Vortrieb des Transportelements in Richtung der ersten divergierenden Nebenbahn unterstützen. Dazu können die Bänder der jeweiligen Gruppe so angeordnet werden, dass sie um einen vorgegebenen Winkel gegen die Senkrechte in Richtung der jeweiligen Nebenbahn gekippt sind, sodass die von den Bändern ausgeübte Kraft sowohl eine Komponente senkrecht zu der der Nebenbahn entsprechenden Führungsschiene als auch in Längsrichtung der Nebenbahn aufweist, und somit den Vortrieb des Transportelements in Richtung den entsprechenden Nebenbahn unterstützt. Der Kippwinkel, um den die Bänder schräg gestellt sind, ist dabei kleiner als 90° und kann für jedes Band der Gruppe unterschiedlich sein. Insbesondere kann der Kippwinkel innerhalb der Gruppe in Richtung der Nebenbahn zunehmen, sodass durch das erste Band der Gruppe im Wesentlichen ein seitliches Auslenken des Transportelements in Richtung der Nebenbahn erfolgt, wohingegen durch das letzte Band der Gruppe im Wesentlichen ein Vortrieb des Transportelements in Richtung der Nebenbahn erfolgt. Darüber hinaus kann durch die Schrägstellung der Bänder eine eventuelle Abweichung von einem vorgegebenen Abstand des Transportelements von den Führungsschienen aufgrund ungewollter, insbesondere asymmetrischer, Anziehungskräfte auf einer Seite des Reaktionselements verhindert werden.

Der Kontakt zwischen Kontaktfläche des Transportelements und dem oder den Bändern des Bandantriebs der passiven Weiche ist auf den Verzweigungsbereich beschränkt und dient lediglich zum Schalten der Weiche, ohne Teile der Führungsschienen zu bewegen. Ein Vortrieb des Transportelements außerhalb des Verzweigungsbereichs der passiven Weiche erfolgt hingegen wie oben beschrieben aufgrund der magnetischen Wechselwirkung der entsprechenden Linearmotorstränge mit den Magneten des Reaktionselements des Transportelements.

Gemäß einer weiteren Weiterbildung kann zwischen der Kontaktfläche des Transportelements und dem Bandantrieb der passiven Weiche eine Kugelmatte derart angeordnet sein, dass die Kontaktfläche des Transportelements über die Kugelmatte im Verzweigungsbereich der passiven Weiche in Kontakt mit dem Bandantrieb tritt. Durch Bereitstellen einer Kugelmatte als Vermittler der Kraft zwischen Bandantrieb und Transportelement kann insbesondere ein Verschleiß des Bandantriebs reduziert werden. Dabei ist jedoch zu beachten, dass die Antriebsrichtung der einzelnen Bänder des Bandantriebs aufgrund der Kugelmatte gegenüber der oben beschriebenen Anordnung mit direktem Kontakt mit der Kontaktfläche umgekehrt werden muss.

Wie durch Schalten der passiven Weiche über gezieltes Ansteuern des ersten bzw. zweiten Linearmotorstrangs kann auch durch Schalten der Weiche mittels des beschriebenen Bandantriebs die Schaltzeit der Weiche reduziert und somit ein Durchsatz der Transporteinrichtung erhöht werden. Insbesondere kann der beschriebene Bandantrieb unterstützend mit dem weiter oben beschriebenen Schalten der Weiche durch gezieltes Ansteuern der Linearmotorstränge kombiniert werden.

Die oben genannte Aufgabe wird auch durch ein Verfahren zum Schalten einer passiven Weiche einer Transporteinrichtung mit einer Transportbahn und mindestens einem Transportelement, welches bewegbar an der Transportbahn angeordnet ist, gelöst,
wobei die passive Weiche eine Hauptbahn und erste und zweite divergierende Nebenbahnen der Transportbahn umfasst;
wobei die Transportbahn die folgenden Elemente umfasst:
eine erste Führungsschiene,
eine der ersten Führungsschiene im Bereich der Hauptbahn gegenüberliegende, zweite Führungsschiene,
einen ersten, parallel zur ersten Führungsschiene angeordneten Linearmotorstrang und
einen zweiten, parallel zur zweiten Führungsschiene angeordneten Linearmotorstrang;
wobei die ersten Führungsschiene und der erste Linearmotorstrang entlang der ersten divergierenden Nebenbahn und der Hauptbahn angeordnet sind, und die zweite Führungsschiene und
der zweite Linearmotorstrang entlang der zweiten divergierenden Nebenbahn und der Hauptbahn angeordnet sind; und
wobei das Verfahren die folgenden Schritte umfasst:
   Bewegen des Transportelements entlang der Hauptbahn zu einem Verzweigungsbereich der passiven Weiche durch Wechselwirkung mindestens eines, vorzugsweise quer zur Transportbahn gerichteten, Permanentmagneten und/oder nicht schaltenden Elektromagneten, welcher an einem Reaktionselement des Transportelements angeordnet ist, welches in eine Lücke zwischen dem ersten und dem zweiten Linearmotorstrang eingreift, mit dem ersten und dem zweiten Linearmotorstrang; und

Führen des im Verzweigungsbereich der passiven Weiche befindlichen Transportelements in Richtung der ersten divergierenden Nebenbahn mittels des ersten Linearmotorstrangs;
wobei die ersten und die zweite Führungsschiene, insbesondere im Bereich der passiven Weiche, feststehend sind.

Hierbei können dieselben Variationen und Weiterbildungen, die oben im Zusammenhang mit der erfindungsgemäßen Transporteinrichtung beschrieben wurden, auch auf das Verfahren zum Schalten einer passiven Weiche angewendet werden. Insbesondere können der erste und der zweite Linearmotorstrang zum Bewegen des Transportelements entlang der Hauptbahn wie oben beschrieben synchron betrieben werden.

Des Weiteren erfolgt das Führen des Transportelements im Verzweigungsbereich der passiven Weiche in Richtung der ersten oder der zweiten Nebenbahn mittels des ersten bzw. zweiten Linearmotorstrangs, wobei der Vortrieb des Transportelements durch magnetische Wechselwirkung des entsprechenden Linearmotorstrangs mit dem mindestens einen Permanentmagneten und/oder nicht schaltenden Elektromagneten des Reaktionselements des Transportelements erfolgt, und wobei die Anziehungskraft augrund der Wechselwirkung des ersten Linearmotorstrangs mit den Magneten des Reaktionselements durch die Anziehungskraft zwischen dem Magneten des Reaktionselements und einer ferromagnetischen Komponente des ersten Linearmotorstrangs im Verzweigungsbereich der passiven Weiche derart verstärkt werden kann, dass das Transportelement entlang der ersten Führungsschiene geleitet werden kann und dabei in der von der ersten und der zweiten Führungsschiene gebildeten Ebene gehalten werden kann. Im Verzweigungsbereich der Weiche findet dazu wie oben beschrieben ein Trennen des Kontakts eines oder mehrerer Lagerelemente des Transportelements mit der zweiten Führungsschiene statt, um ein Leiten des Transportelements in Richtung der ersten Nebenbahn zu ermöglichen. Es versteht sich, dass das erfindungsgemäße Verfahren auch die äquivalenten Schritte zum Leiten des Transportelements in Richtung der zweiten divergierenden Nebenbahn umfasst. Die Erfindung umfasst weiterhin ein Verfahren zum Schalten einer passiven Weiche zum gezielten Führen eines Transportelements von einer ersten oder zweiten Nebenbahn zu einer Hauptbahn der Weiche, wobei auch hier das Führen des im Verzweigungsbereich der Weiche befindlichen Transportelements mittels des Linearmotorstrangs auf der Seite der entsprechenden Nebenbahn erfolgt.

Erfindungsgemäß sind die erste Führungsschiene und der erste Linearmotorstrang entlang der ersten divergierenden Nebenbahn und der Hauptbahn angeordnet und die zweite Führungsschiene und der zweite Linearmotorstrang entlang der zweiten divergierenden Nebenbahn und der Hauptbahn angeordnet. Somit bilden die erste Führungsschiene und die zweite Führungsschiene die außenliegenden Führungsschienen der passiven Weiche mit den beiden divergierenden Nebenbahnen.

Gemäß einer weiteren Weiterbildung kann eine Stromversorgung des zweiten Linearmotorstrangs im Verzweigungsbereich der passiven Weiche bei Eintritt des Transportelements in den Verzweigungsbereich mittels einer Steuereinheit der Transporteinrichtung unterbrochen werden, um das Führen des Transportelements in Richtung der ersten divergierenden Nebenbahn zu unterstützen. Entsprechend kann die Stromversorgung des ersten Linearmotorstrangs im Verzweigungsbereich unterbrochen werden, um das Führen des Transportelements in Richtung der zweiten Nebenbahn zu unterstützen. Das Unterbrechen der Stromversorgung des ersten oder zweiten Linearmotorstrangs kann hierbei insbesondere mittels eines elektronischen Schalters der Steuereinheit der Transporteinrichtung geschehen, welcher entweder den ersten Linearmotorstrang oder den zweiten Linearmotorstrang mit der Stromversorgung verbindet.

In einer alternativen Weiterbildung kann eine magnetische Polung des zweiten Linearmotorstrangs im Verzweigungsbereich der passiven Weiche bei Eintritt des Transportelements in den Verzweigungsbereich mittels einer Steuereinheit der Transporteinrichtung invertiert werden, um das Führen des Transportelements in Richtung der ersten divergierenden Nebenbahn zu unterstützen.

Dieselben Variationen und Weiterbildungen, die zuvor im Zusammenhang mit der erfindungsgemäßen Transporteinrichtung beschrieben wurden, können auch auf die hier erwähnten Verfahren zum Schalten der passiven Weiche angewendet werden. Insbesondere kann dem durch die elektrischen Wicklungen des zweiten Linearmotorstrangs fließenden elektrischen Strom ein hochfrequenter Wechselstrom überlagert werden, welcher eine zusätzliche Abstoßung zwischen dem zweiten Linearmotorstrang und einem elektrisch leitenden Element des Reaktionselements des Transportelements hervorruft.

Gemäß einer alternativen oder ergänzenden Weiterbildung kann durch ein Aktivieren eines im Verzweigungsbereich der passiven Weiche angeordneten Bandantriebs eine Kraft auf eine Kontaktfläche des Transportelements, welche derart angeordnet ist, dass sie im Verzweigungsbereich der Weiche in Kontakt mit dem Bandantrieb tritt, in Richtung der ersten divergierenden Nebenbahn ausgeübt werden. Dieselben Variationen und Weiterbildungen, die oben im Zusammenhang mit der erfindungsgemäßen passiven Weiche mit Bandantrieb beschrieben wurden, können auch hier Anwendung finden.

Bei jedem der oben beschriebenen Verfahren kann insbesondere mittels entlang der Transportbahn, insbesondere entlang der Hauptbahn, angeordneter Sensoren die Position eines im Zulauf zur passiven Weiche befindlichen Transportelements kontinuierlich oder in regelmäßigen Abständen bestimmt werden, wobei ein Schalten der passiven Weiche bei Erreichen eines vorgegebenen Abstands des Transportelements von der Weichenspitze der Weiche durch Abschalten der Stromversorgung bzw. Umpolen eines Linearmotorstrangs und/oder durch Aktivieren eines oder mehrerer Bänder einer Gruppe von Bändern zum Leiten des Transportelements in Richtung der ersten oder der zweiten Nebenbahn ohne das mechanische Bewegen von Teilen der Führungsschienen erfolgen kann. Dabei kann das Aktivieren des Bandantriebs mit dem Schalten durch Unterbrechen der Stromversorgung bzw. Umpolen eines Linearmotorstrangs kombiniert werden, um die Fehleranfälligkeit der Weiche zu reduzieren.

Da gemäß den oben beschrieben Verfahren keinerlei Teile der Führungsschienen im Bereich der Weiche mechanisch bewegt werden müssen, kann eine geringe Schaltzeit der passiven Weiche und damit ein hoher Durchsatz an Transportelementen erreicht werden. Zusätzlich kann der mechanische Verschleiß der Weiche durch den Wegfall mechanischer Verschiebeelemente reduziert werden. Des Weiteren sind zum Schalten der passiven Weiche auch keine zusätzlichen Elektromagnete notwendig. Da das Schalten der Weiche mittels des auch für den Vortrieb verantwortlichen Linearmotorstrangs erfolgen kann, ist ein gleichmäßiger Vortrieb des Transportelements bei der Weichendruchfahrt möglich.

Weitere Merkmale und beispielhafte Ausführungsformen sowie Vorteile der vorliegenden Erfindung werden nachfolgend anhand der Zeichnungen näher erläutert. Es versteht sich, dass die Ausführungsformen nicht den Bereich der vorliegenden Erfindung erschöpfen. Es versteht sich weiterhin, dass einige oder sämtliche der im Weiteren beschriebenen Merkmale auch auf andere Weise miteinander kombiniert werden können.
Figur 1 zeigt eine beispielhafte Ausführung einer passiven Weiche gemäß der vorliegenden Erfindung in dreidimensionaler Draufsicht.
Figur 2 zeigt einen Querschnitt einer beispielhaften Ausführung eines Transportelements gemäß der vorliegenden Erfindung im Bereich der Hauptbahn der in Figur 1 gezeigten passiven Weiche.
Figur 3 stellt eine beispielhafte Ausführung des Reaktionselements des Transportelements zwischen den außenliegenden Linearmotorsträngen gemäß der vorliegenden Erfindung dar.
Figur 4 stellt eine beispielhafte Ausführung eines Bandantriebs mit Kugelmatte im Verzweigungsbereich der passiven Weiche gemäß der vorliegenden Erfindung dar.
Figur 5 stellt skizzenhaft eine beispielhafte Anordnung der Gruppen von Bändern des Bandantriebs gemäß der vorliegenden Erfindung für eine passive Weiche mit einer geraden und einer abzweigenden Nebenbahn dar.

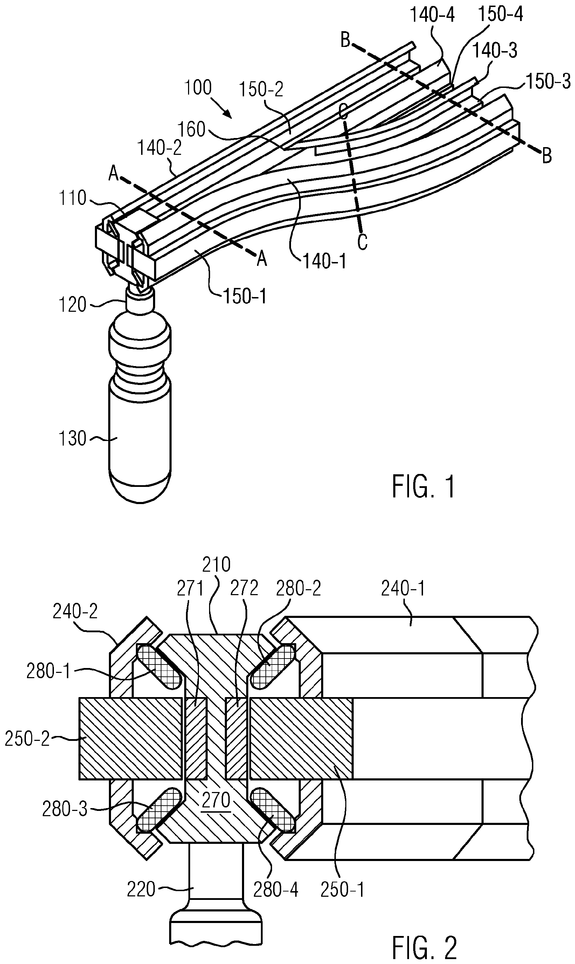

Figur 1 zeigt eine beispielhafte Ausführung einer passiven Weiche gemäß der vorliegenden Erfindung in dreidimensionaler Draufsicht. Die gezeigte passive Weiche 100 besteht aus der in der perspektivischen Darstellung nach vorne weisenden Hauptbahn, einer geraden, in der Darstellung nach hinten links weisenden Nebenbahn sowie einer gekrümmten, in der Darstellung nach hinten rechts weisenden Nebenbahn. Die Hauptbahn ist mit der rechten Nebenbahn über eine gekrümmte erste Führungsschiene 140-1 verbunden, entlang derer ein erster Linearmotorstrang 150-1 angeordnet ist. Des Weiteren ist die Hauptbahn mit der linken Nebenbahn über die gerade zweite Führungsschiene 140-2 verbunden, entlang derer ein zweiter Linearmotorstrang 150-2 angeordnet ist. Die vorliegende Erfindung ist jedoch nicht auf passive Weichen beschränkt, bei welchen eine der Führungsschienen gerade ist, sondern umfasst auch solche Weichen, bei denen beide Nebenbahnen und somit beide Führungsschienen gekrümmt sind.

An der Weichenspitze 160 setzen entsprechend komplementäre Führungsschienen 140-3 und 140-4 der rechten bzw. linken Nebenbahn sowie die zugehörigen komplementären Linearmotorstränge 150-3 bzw. 150-4 an. Somit stehen sich überall außerhalb des Verzweigungsbereichs der passiven Weiche zwei parallel geführte Linearmotorstränge gegenüber, durch welche der Vortrieb des Transportelements bewirkt wird. Die Linearmotorstränge umfassen dabei eine Vielzahl, hier nicht dargestellter, elektrischer Wicklungen in Form von einzeln oder blockweise ansteuerbaren Elektromagneten, welche durch eine, nicht dargestellte, Steuer- und/oder Regeleinheit der Transporteinrichtung gesteuert werden.

Die passive Weiche erstreckt sich von der Stelle, an welcher die erste und die zweite Führungsschiene 140-1 und 140-2 zu divergieren beginnen, angedeutet durch die gestrichelte Linie A-A, bis zu einer Stelle, an der die beiden Nebenbahnen bis zu einem vorgegebenen Abstand divergiert sind, angedeutet durch die gestrichelte Linie B-B. An die Weiche können sowohl gerade als auch gekrümmte Fortsetzungen der Hauptbahn bzw. der Nebenbahnen in Modulbauweise angesetzt werden. Der Verzweigungsbereich der Weiche kann hierbei als der Bereich zwischen der einsetzenden Divergenz der ersten und zweiten Führungsschiene, angedeutet durch die gestrichelte Linie A-A, und den der Weichenspitze 160 nächstliegenden Stellen der Nebenbahnen, an denen die Krümmung der jeweiligen Führungsschiene Null ist, definiert werden. In dem hier dargestellten Spezialfall ist diese Stelle für die rechte Nebenbahn durch die gestrichelte Linie C-C angedeutet. Bei der linken, geraden Nebenbahn kann das Ende des Verzweigungsbereiches der Weiche beliebig nah an der Weichenspitze 160 liegen. Aus bautechnischen Gründen können Elemente der passiven Weiche, wie der weiter unten beschriebene Bandantrieb, so angeordnet sein, dass sie sich über eine für beide Nebenbahnen gleiche Distanz entlang der jeweiligen Nebenbahn ab der Weichenspitze erstrecken. Eine Vielzahl von Variationen ist hierbei vorstellbar. Die hier gezeigten Begrenzungslinien für die passive Weiche und den Verzweigungsbereich der Weiche sind daher als beispielhafte Ausführungen zu verstehen, welche den Gegenstand der vorliegenden Erfindung nicht beschränken. Insbesondere kann der Verzweigungsbereich der Weiche auch bis zur gestrichelten Linie B-B ausgedehnt werden.

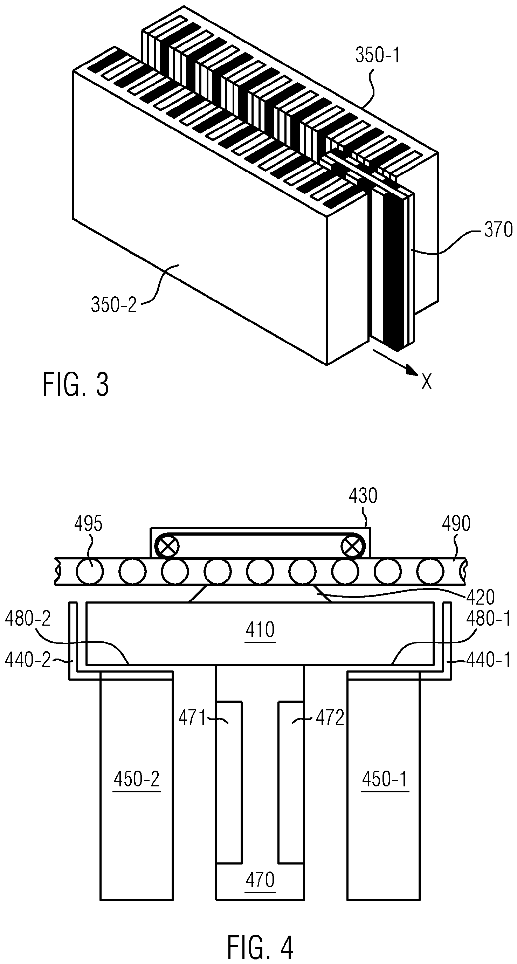

Exemplarisch ist in Figur 1 auch ein Transportelement 110 im Bereich der Hauptbahn außerhalb des Verzweigungsbereichs gezeigt. Mittels eines Greifelements 120 transportiert das gezeigte Transportelement 110 einen Behälter 130, hier exemplarisch als Kunststoffflasche gezeigt. In der dargestellten speziellen Ausführung ist die Kunststoffflasche hängend unterhalb des Transportelements 110 angeordnet. Es versteht sich jedoch, dass der transportierte Behälter auch stehend auf dem Transportelement 110, wenn nötig mittels einer entsprechenden Haltevorrichtung, transportiert werden kann. Je nach Position des transportierten Behälters kann demnach der in Figur 4 gezeigte Bandantrieb oberhalb oder unterhalb der passiven Weiche angebracht sein.

Figur 2 zeigt einen Querschnitt durch ein exemplarisch dargestelltes Transportelement außerhalb des Verzweigungsbereichs der passiven Weiche. Außerhalb des Verzweigungsbereichs sind die erste Führungsschiene 240-1 und die zweite Führungsschiene 240-2 mit ihren entsprechenden Linearmotorsträngen 250-1 bzw. 250-2 parallel zueinander angeordnet. Das hier exemplarisch gezeigte Transportelement 210 wird zwischen den beiden Führungsschienen geführt, wobei in der hier dargestellten speziellen Ausführung Führungsrollen 280-1 bis 280-4 als Lagerelemente des Transportelements in Kontakt mit dafür eigens an den Führungsschienen 240'1 und 240'2 vorgesehenen Führungsrinnen stehen. Bei einsetzender Divergenz der beiden Führungsschienen im Verzweigungsbereich der Weiche wird der Kontakt der Führungsrollen, je nach angesteuerter Nebenbahn, einseitig auf der Seite einer der beiden Führungsschienen getrennt. Anders als die hier dargestellten Führungsrinnen der Führungsschienen müssen zum Trennen des Kontaktes bei bestimmten alternativen Ausführungen der Führungselemente, z. B. als Führungskanäle oder Spurkränze, die Führungselemente beidseitig im Verzweigungsbereich der passiven Weiche unterbrochen werden.

Neben dem Greifelement 220 für den zu transportierenden Behälter weist das hier dargestellte Transportelement 210 ein Reaktionselement 270 auf, welches durch Wechselwirkung mit den Linearmotorsträngen 250-1 und 250-2 dem Vortrieb des Transportelements entlang der Transportbahn dient. Hierzu weist das Reaktionselement einen oder mehrere Permanentmagneten und/oder nicht schaltende Elektromagnete auf, von denen hier exemplarisch lediglich zwei magnetische Pole 271 und 272 dargestellt sind. In der hier dargestellten exemplarischen Ausführung umfasst das Reaktionselement auf beiden Seiten getrennt voneinander angeordnete Permanentmagnete, welche in der Ebene angeordnet sind, deren Normale die beiden Führungsschienen senkrecht miteinander verbindet (vergleiche Figur 3). Zwischen den beidseitig angeordneten Permanentmagneten bzw. nicht schaltenden Elektromagneten kann das Transportelement, wie hier gezeigt, eine elektrisch leitende und/oder ferromagnetische Komponente, z. B. in Form einer Trägerplatte, aufweisen. Eine elektrisch leitende Komponente erfährt hierbei wie oben beschrieben bei Verwendung eines hochfrequenten Wechselfeldes in einem der beiden Linearmotorstränge eine magnetische Abstoßung von dem entsprechenden Linearmotorstrang aufgrund induzierter Ströme. Auch eine ferromagnetische Komponente kann eine solche Abstoßung bei Wahl geeigneter Hochfrequenzen erfahren, wobei eine Anziehungskraft zwischen dem Linearmotorstrang auf der Seite der Zielnebenbahn und der ferromagnetischen Komponente das Halten des Transportelements an der Führungsschiene auf der Seite der Zielnebenbahn unterstützt.

Gemäß der vorliegenden Erfindung umfasst das Transportelement keinerlei separate (schaltende) Elektromagnete, um das Transportelement im Verzweigungsbereich der Weiche in Richtung der einen oder der anderen Nebenbahn zu führen. Stattdessen erfolgt das Schalten der passiven Weiche gemäß der vorliegenden Erfindung lediglich durch Wechselwirkung eines oder beider Linearmotorstränge im Verzweigungsbereich der Weiche mit dem oder den Permanentmagneten bzw. nicht schaltenden Elektromagneten des Reaktionselements 270. Beispielsweise kann wie zuvor beschrieben zum Führen des Transportelements in Richtung der in Figur 1 gezeigten rechten Nebenbahn ein Segment des Linearmotorstrangs 250-2 im Verzweigungsbereich der passiven Weiche vom Strom getrennt oder magnetisch umgepolt werden, sodass die Anziehungskraft zwischen dem Linearmotorstrang 250-2 und dem Magneten des Reaktionselements 270, die außerhalb des Verzweigungsbereichs der Weiche zum Halten des Transportelements 210 an der zweiten Führungsschiene 240-2 dient, im Verzweigungsbereich der Weiche entfällt bzw. in eine abstoßende Kraft umgewandelt wird. Damit das Transportelement im Verzweigungsbereich der Weiche nicht vollständig aus der Führungsschiene rutscht, sind der oder die Permanentmagneten bzw. nicht schaltenden Elektromagneten des Reaktionselements 270 derart dimensioniert, dass die magnetische Anziehung zwischen ihnen und einer, hier nicht gezeigten, ferromagnetischen Komponente des jeweiligen Linearmotorstrangs stark genug ist, um das Transportelement, selbst bei Transport einer Nutzlast 130, an den entsprechenden Führungsschienen zu halten.

Eine Detaildarstellung des Reaktionselements 370 des Transportelements sowie der beiden Linearmotorstränge 350-1 und 350-2 ist exemplarisch in Figur 3 wiedergegeben. Das hier beispielhaft dargestellte Reaktionselement 370 weist auf jeder Seite je 3 entlang der Transportbahn, d. h. in x-Richtung, ausgerichtete Permanentmagnete und/oder nicht schaltende Elektromagnete, dargestellt durch abwechselnd schwarze und weiße magnetische Pole, auf. Entsprechend weisen die skizzenhaft dargestellten Linearmotorstränge 350-1 und 350-2 auf der Innenseite Elektromagnete mit entlang der Transportbahn alternierender magnetischer Polung auf, welche mit dem sich in der Lücke zwischen den Linearmotorsträngen befindlichen Reaktionselement 370 wechselwirken. Die hier dargestellte magnetische Polung der Linearmotorstränge entspricht dabei einem zeitlichen Schnappschuss und wird zum Vortrieb des Transportelements mittels einer Steuer- und/oder Regeleinheit der Transporteinrichtung in der Art eines synchronen oder asynchronen Linearmotors betrieben. Zwischen den beidseitig auf dem Reaktionselement 370 angebrachten Permanentmagneten bzw. nicht schaltenden Elektromagneten ist weiterhin ein, unter Umständen elektrisch leitendes, Trägerelement gezeigt, welches mit einem Hochfrequenzwechselfeld eines der beiden Linearmotorstränge magnetisch abstoßend wechselwirken kann. Die hier dargestellte Anordnung der magnetischen Pole, sowohl des Reaktionselements als auch der Linearmotorstränge, ist als nicht einschränkendes Beispiel gezeigt. Eine Vielzahl alternativer Anordnungen, z. B. als Halbachanordnung, ist im Rahmen der vorliegenden Erfindung denkbar.

In Figur 4 ist skizzenhaft der Bandantrieb einer passiven Weiche im Bereich einsetzender Verzweigung der Führungsschienen dargestellt. Das Transportelement 410 ist hier, anders als in Figur 1 und 2, mittels Gleitlager 480-1 und 480-2 an den Führungsschienen 440-1 und 440-2 gelagert. Zur Reduzierung der Reibung können die Kontaktflächen der Gleitlager sowie der Führungsschienen z. B. mit Teflon oder einem anderen Material mit niedrigem Reibungskoeffizienten beschichtet sein. Das Reaktionselement 470 des Transportelements greift auch hier in die Lücke zwischen den Linearmotorsträngen 450-1 und 450-2 ein und weist beidseitig separat angeordnete Magnete 471 und 472 auf. Zusätzlich weist das hier dargestellte Transportelement eine Erhebung 420 im oberen Bereich auf, welche eine Kontaktfläche besitzt, die im Verzweigungsbereich der passiven Weiche über eine hier schematisch dargestellte Kugelmatte 490 mit Kugelelementen 495 in Kontakt mit einem Bandantrieb 430 der passiven Weiche tritt. Außerhalb des Verzweigungsbereichs der Weiche bewegt sich die Erhebung 420 ohne Kontakt zu Elementen der Transportbahn, um eine erhöhte Reibung zu vermeiden. Je nachdem, in welche Richtung der Bandantrieb 430 betrieben wird, wird auf die Kontaktfläche des Transportelements 410 mittels der Kugelelemente 495 eine entgegengesetzt gerichtete Kraft ausgeübt, mit welcher das Transportelement in Richtung der ersten oder der zweiten Nebenbahn gelenkt werden kann.

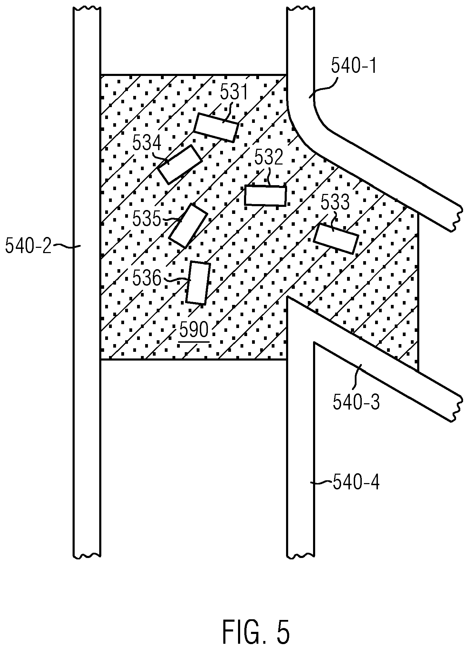

Dabei kann der Bandantrieb zwei Gruppen von kurzen Bändern umfassen, welche entlang der Richtung der jeweiligen Nebenbahn angeordnet sind. Figur 5 zeigt exemplarisch einen Fall, bei welchem im Verzweigungsbereich der passiven Weiche zwei Gruppen von jeweils drei Bändern oberhalb der Kugelmatte 590 angeordnet sind. Von der passiven Weiche sind hier der Einfachheit halber lediglich die erste und die zweite Führungsschiene 540-1 und 540-2 sowie die beiden komplementären Führungsschienen 540-3 und 540-4 der beiden Nebenbahnen gezeigt.

Jede der beiden Gruppen von Bändern umfasst in der hier dargestellten speziellen, nicht limitierenden Ausführung drei einzelne Bänder 531 bis 533 bzw. 534 bis 536, welche im Wesentlichen entlang der Mittellinie zwischen den Führungsschienen in Richtung der jeweiligen Nebenbahn angeordnet sind. Dabei sind die Bänder in dem hier dargestellten Fall derart schräg zur Bewegungsrichtung des Transportelements angeordnet, dass durch Rotation der Bänder sowohl eine auslenkende Kraft senkrecht zur Führungsschiene der Zielnebenbahn ausgeübt wird als auch ein Vortrieb des Transportelements in Richtung der Zielnebenbahn bewirkt wird. Insbesondere sind die dargestellten Bänder gekippt gegen die Normale auf der der Zielnebenbahn entsprechenden Führungsschiene 540-1 bzw. 540-2 angeordnet, wobei der Kippwinkel in Richtung der Zielnebenbahn derart zunimmt, dass das erste Band 531 bzw. 534 der jeweiligen Gruppe im Wesentlichen eine auslenkende Kraft in Richtung der jeweiligen Führungsschiene 540-1 bzw. 540-2 auf die Kontaktfläche des Transportelements ausübt und das letzte Band 533 bzw. 536 der jeweiligen Gruppe im Wesentlichen eine den Vortrieb des Transportelements in Richtung der Zielnebenbahn unterstützende Kraft auf die Kontaktfläche des Transportelements ausübt. Auch hier sind eine Vielzahl alternativer Anordnungen und alternativer Anzahlen von Bändern des Bandantriebs vorstellbar.

Durch Schrägstellung der einzelnen Bänder des Bandantriebs kann erreicht werden, dass das Transportelement sicher an der der Nebenbahn entsprechenden Führungsschiene 540-1 bzw. 540-2 gehalten und geführt wird, wobei die senkrecht zur Führungsschiene ausgeübte Kraft eine magnetische Anziehung zwischen dem oder den Magneten des Reaktionselements des Transportelements und einer ferromagnetischen Komponente des jeweiligen Linearmotorstrangs unterstützt. Insbesondere kann der in Figur 4 und 5 dargestellte Bandantrieb zum Schalten einer passiven Weiche mit dem oben beschriebenen Schalten durch Trennen der Stromversorgung bzw. Umpolen eines Segments eines Linearmotorstrangs im Verzweigungsbereich der Weiche vorteilhaft kombiniert werden, um die Fehleranfälligkeit der Weiche zu reduzieren. In allen hier dargestellten Ausführungen weist die passive Weiche keinerlei mechanisch bewegte Teile der Führungsschienen auf, sodass eine Schaltzeit der Weiche gegenüber den im Stand der Technik bekannten Weichen erheblich reduziert werden kann. Darüber hinaus werden keinerlei zusätzliche Elektromagnete des Transportelements zum Steuern des Transportelements benötigt, wodurch die Steuer- und/oder Regeleinheit der Transporteinrichtung vereinfacht werden kann. Aufgrund des Wegfalls mechanisch bewegter Teile der Führungsschienen reduziert sich zudem ein mechanischer Verschleiß der Weiche.

## Patentansprüche

1. Transporteinrichtung, umfassend:
eine Transportbahn mit mindestens einer passiven Weiche (100); und
mindestens ein Transportelement (110; 210; 410), welches bewegbar an der Transportbahn angeordnet ist;
wobei die passive Weiche (100) eine Hauptbahn und erste und zweite divergierende Nebenbahnen umfasst;
wobei die Transportbahn im Bereich der passiven Weiche (100) die folgenden Elemente umfasst:
eine erste Führungsschiene (140-1; 240-1; 440-1; 540-1),
eine der ersten Führungsschiene im Bereich der Hauptbahn gegenüberliegende, zweite Führungsschiene (140-2; 240-2; 440-2; 540-2),
einen ersten, parallel zur ersten Führungsschiene angeordneten Linearmotorstrang (150-1; 250-1; 350-1; 450-1) und
einen zweiten, parallel zur zweiten Führungsschiene angeordneten Linearmotorstrang (150-2; 250-2; 350-2; 450-2);
wobei das Transportelement (110; 210; 410) ein Reaktionselement (270; 370; 470) mit mindestens einem, vorzugsweise quer zur Transportbahn gerichteten, Permanentmagneten und/oder nicht schaltenden Elektromagneten (271, 272; 471, 472) aufweist,
wobei das Transportelement (110; 210; 410) durch Wechselwirkung des Permanentmagneten und/oder nicht schaltenden Elektromagneten mit dem ersten und/oder zweiten Linearmotorstrang entlang der Transportbahn bewegbar ist,
wobei die erste und die zweite Führungsschiene im Bereich der passiven Weiche (100) feststehend sind; und
wobei im Zulauf der passiven Weiche (100) entlang der Hauptbahn wenigstens eine Identifikationserfassungsvorrichtung zum Erfassen einer entsprechenden Identifikationseinheit des Transportelements angeordnet ist.

2. Transporteinrichtung nach Anspruch 1, weiterhin eine Steuer- und/oder Regeleinheit umfassend, wobei die Steuer- und/oder Regeleinheit dazu ausgebildet ist, das Transportelement (110; 210; 410) in Abhängigkeit von der erfassten Identifikationseinheit durch Schalten der passiven Weiche (100) der ersten oder der zweiten Nebenbahn zuzuführen.

3. Transporteinrichtung nach Anspruch 1 oder 2, wobei jedes Transportelement (110; 210; 410) eine eindeutige Identifikationseinheit aufweist.

4. Transporteinrichtung nach Anspruch 3, wobei die Identifikationseinheit einen Strichcode, einen auslesbaren Speicherchip oder einen aufgedruckten, aufgeklebten und/oder eingravierten alphanumerischen Code umfasst.

5. Transporteinrichtung nach einem der Ansprüche 2 bis 4, wobei die Steuer- und/oder Regeleinheit weiterhin dazu ausgebildet ist, einen Beladungszustand des Transportelements (110; 210; 410) automatisch anhand der erfassten Identifikationseinheit zu bestimmen.

6. Transporteinrichtung nach Anspruch 5,
wobei das Reaktionselement (270; 370; 470) mindestens einen nicht schaltenden Elektromagneten (271, 272; 471, 472) aufweist, und
wobei die Steuer- und/oder Regeleinheit weiterhin dazu ausgebildet ist, eine Stromstärke durch den mindestens einen nicht schaltenden Elektromagneten derart zu regeln, dass das beladene Transportelement (110; 210; 410) aufgrund der magnetischen Anziehungskraft zwischen den Magneten (271, 272; 471, 472) des Reaktionselements und dem, insbesondere mit einer ferromagnetischen Komponente ausgestatteten, Linearmotorstrang (150-1, 150-2; 250-1, 250-2; 350-1, 350-2; 450-1, 450-2) auf der Seite der Nebenbahn, in deren Richtung das Transportelement (110; 210; 410) geleitet werden soll, an der zu dem entsprechenden Linearmotorstrang gehörenden Führungsschiene (140-1, 140-2; 240-1, 240-2; 440-1, 440-2; 540-1, 540-2) gehalten werden kann.

7. Transporteinrichtung nach einem der vorhergehenden Ansprüche, weiterhin eine Vielzahl von entlang der Transportbahn angeordneten Sensoren umfassend,
wobei die Steuer- und/oder Regeleinheit weiterhin dazu ausgebildet ist, eine Position des Transportelements (110; 210; 410) im Zulauf der passiven Weiche (100) mittels der Vielzahl von Sensoren zu bestimmen.

8. Transporteinrichtung nach Anspruch 7, wobei die Vielzahl von Sensoren derart entlang der Hauptbahn angeordnet ist, dass die Steuer- und/oder Regeleinheit die Position des Transportelements (110; 210; 410) im Zulauf der passiven Weiche (100) entlang der Hauptbahn bestimmen kann.

9. Transporteinrichtung nach Anspruch 7 oder 8, wobei die Steuer- und/oder Regeleinheit weiterhin dazu ausgebildet ist, einen Strom von Transportelementen (110; 210; 410) an der passiven Weiche (100) durch Schalten der passiven Weiche in Abhängigkeit von den erfassten Identifikationseinheiten der Transportelemente aufzuteilen.

10. Verfahren zum Schalten einer passiven Weiche (100) einer Transporteinrichtung mit einer Transportbahn und mindestens einem Transportelement (110; 210; 410), welches bewegbar an der Transportbahn angeordnet ist;
wobei die passive Weiche (100) eine Hauptbahn und erste und zweite divergierende Nebenbahnen der Transportbahn umfasst;
wobei die Transportbahn im Bereich der passiven Weiche (100) die folgenden Elemente umfasst:
eine erste Führungsschiene (140-1; 240-1; 440-1; 540-1),
eine der ersten Führungsschiene im Bereich der Hauptbahn gegenüberliegende, zweite Führungsschiene (140-2; 240-2; 440-2; 540-2),
einen ersten, parallel zur ersten Führungsschiene angeordneten Linearmotorstrang (150-1; 250-1; 350-1; 450-1) und
einen zweiten, parallel zur zweiten Führungsschiene angeordneten Linearmotorstrang (150-2; 250-2; 350-2; 450-2);
wobei die erste Führungsschiene und der erste Linearmotorstrang entlang der ersten divergierenden Nebenbahn und der Hauptbahn angeordnet sind, und die zweite Führungsschiene und der zweite Linearmotorstrang entlang der zweiten divergierenden Nebenbahn und der Hauptbahn angeordnet sind;
wobei die erste und die zweite Führungsschiene (140-1, 140-2; 240-1, 240-2; 440-1, 440-2; 540-1, 540-2) im Bereich der passiven Weiche feststehend sind;
wobei im Zulauf der passiven Weiche (100) entlang der Hauptbahn wenigstens eine Identifikationserfassungsvorrichtung zum Erfassen einer entsprechenden Identifikationseinheit des Transportelements (110; 210; 410) angeordnet ist; und
wobei das Verfahren die folgenden Schritte umfasst:
Bewegen des Transportelements (110; 210; 410) entlang der Hauptbahn zu einem Verzweigungsbereich der passiven Weiche (100) durch Wechselwirkung mindestens eines, vorzugsweise quer zur Transportbahn gerichteten, Permanentmagneten und/oder nicht schaltenden Elektromagneten (271, 272; 471, 472), welcher an einem Reaktionselement (270; 370; 470) des Transportelements angeordnet ist, mit dem ersten und dem zweiten Linearmotorstrang;
Erfassen der Identifikationseinheit des Transportelements mittels der Identifikationserfassungsvorrichtung; und
Führen des im Verzweigungsbereich der passiven Weiche befindlichen Transportelements (110; 210; 410) in Richtung der ersten divergierenden Nebenbahn mittels des ersten Linearmotorstrangs oder in Richtung der zweiten divergierenden Nebenbahn mittels des zweiten Linearmotorstrangs.

11. Verfahren nach Anspruch 10, wobei das Transportelement (110; 210; 410) in Abhängigkeit von der erfassten Identifikationseinheit durch Schalten der passiven Weiche (100) der ersten oder der zweiten Nebenbahn zugeführt wird.

12. Verfahren nach Anspruch 10 oder 11, weiterhin das automatische Bestimmen eines Beladungszustands des Transportelements (110; 210; 410) anhand der erfassten Identifikationseinheit umfassend.

13. Verfahren nach Anspruch 12, wobei das Reaktionselement (270; 370; 470) mindestens einen nicht schaltenden Elektromagneten (271, 272; 471, 472) aufweist, und
wobei eine Stromstärke durch den mindestens einen nicht schaltenden Elektromagneten (271, 272; 471, 472) derart geregelt wird, dass das beladene Transportelement (110; 210; 410) aufgrund der magnetischen Anziehungskraft zwischen den Magneten (271, 272; 471, 472) des Reaktionselements (270; 370; 470) und dem, insbesondere mit einer ferromagnetischen Komponente ausgestatteten, Linearmotorstrang (150-1, 150-2; 250-1, 250-2; 350-1, 350-2; 450-1, 450-2) auf der Seite der Nebenbahn, in deren Richtung das Transportelement geleitet werden soll, an der zu dem entsprechenden Linearmotorstrang gehörenden Führungsschiene (140-1, 140-2; 240-1, 240-2; 440-1, 440-2; 540-1, 540-2) gehalten werden kann.

14. Verfahren nach einem der Ansprüche 10 bis 13, wobei weiterhin eine Position des Transportelements (110; 210; 410) im Zulauf der passiven Weiche (100) entlang der Hauptbahn mit einer Vielzahl von entlang der Hauptbahn angeordneten Sensoren bestimmt wird; und
wobei insbesondere ein Strom von Transportelementen (110; 210; 410) an der passiven Weiche (100) durch Schalten der passiven Weiche (100) in Abhängigkeit von den erfassten Identifikationseinheiten der Transportelemente aufgeteilt wird.

15. Verwendung eines Transportelements (110; 210; 410) mit einer Identifikationseinheit in einer Transporteinrichtung mit einer Transportbahn mit mindestens einer passiven Weiche (100);
wobei das Transportelement (110; 210; 410) bewegbar an der Transportbahn angeordnet ist;
wobei das Transportelement (110; 210; 410) ein Reaktionselement (270; 370; 470) mit mindestens einem, vorzugsweise quer zur Transportbahn gerichteten, Permanentmagneten und/oder nicht schaltenden Elektromagneten (271, 272; 471, 472) aufweist,
wobei das Transportelement (110; 210; 410) durch Wechselwirkung des Permanentmagneten und/oder nicht schaltenden Elektromagneten mit dem ersten und/oder zweiten Linearmotorstrang entlang der Transportbahn bewegbar ist,
wobei die passive Weiche (100) eine Hauptbahn und erste und zweite divergierende Nebenbahnen umfasst;
wobei die Transportbahn im Bereich der passiven Weiche (100) die folgenden Elemente umfasst:
eine erste Führungsschiene (140-1; 240-1; 440-1; 540-1),
eine der ersten Führungsschiene im Bereich der Hauptbahn gegenüberliegende, zweite Führungsschiene (140-2; 240-2; 440-2; 540-2),
einen ersten, parallel zur ersten Führungsschiene angeordneten Linearmotorstrang (150-1; 250-1; 350-1; 450-1) und
einen zweiten, parallel zur zweiten Führungsschiene angeordneten Linearmotorstrang (150-2; 250-2; 350-2; 450-2);
wobei die erste und die zweite Führungsschiene im Bereich der passiven Weiche (100) feststehend sind; und
wobei im Zulauf der passiven Weiche (100) entlang der Hauptbahn wenigstens eine Identifikationserfassungsvorrichtung zum Erfassen der Identifikationseinheit des Transportelements angeordnet ist.

## Claims

1. Transport system, comprising:
a transport track having at least one passive track switch (100) and
at least one transport element (110; 210; 410) which is movably arranged on the transport track;
wherein the passive track switch (100) comprises a main track and first and second diverging side tracks;
wherein the transport track comprises the following elements in the region of the passive track switch (100):
a first guide rail (140-1; 240-1; 440-1; 540-1),
a second guide rail (140-2; 240-2; 440-2; 540-2) opposite the first guide rail in the region of the main track,
a first linear-motor string (150-1; 250-1; 350-1; 450-1) arranged in parallel with the first guide rail and
a second linear-motor string (150-2; 250-2; 350-2; 450-2) arranged in parallel with the second guide rail;
wherein the transport element (110; 210; 410) comprises a reaction element (270; 370; 470) having at least one permanent magnet and/or non-switching electromagnet (271, 272; 471, 472), preferably oriented transversely to the transport track,
wherein the transport element (110; 210; 410) can be moved along the transport track by the permanent magnet and/or non-switching electromagnet interacting with the first and/or second linear-motor string,
wherein the first and the second guide rail are stationary in the region of the passive track switch (100),
wherein at least one identification recording device for recording a respective identification unit of the transport element is installed in the intake of the passive track switch (100) along the main track.

2. Transport system according to claim 1, further comprising a control and/or regulating unit, wherein the control and/or regulating unit is configured to lead the transport element (110; 210; 410) into the first or the second side track according to the recorded identification unit through switching of the passive track switch (100).

3. Transport system according to claim 1 or 2, wherein each transport element (110; 210; 410) has an unambiguous identification unit.

4. Transport system according to claim 3, wherein the identification unit comprises a barcode, a readable memory chip, or a printed, adhesive and/or engraved alphanumeric code.

5. Transport system according to one of claims 2 to 4, wherein the control and/or regulating unit is further configured to automatically determine a loading state of the transport element (110; 210; 410) based on the recorded identification unit.

6. Transport system according to claim 5,
wherein the reaction element (270; 370; 470) comprises at least one non-switching electromagnet (271, 272; 471, 472), and
wherein the control and/or regulating unit is further configured to control a current strength through the at least one non-switching electromagnet in such a way that the loaded transport element (110; 210; 410) can be held on the guide rail (140-1, 140-2; 240-1, 240-2; 440-1, 440-2; 540-1, 540-2) that belongs to the linear motor string on the side of the side track in whose direction the transport element (110; 210; 410) is to be guided, due to the magnetic attraction force between the magnets (271, 272; 471, 472) of the reaction element and the respective linear motor string (150-1, 150-2; 250-1, 250-2; 350-1, 350-2; 450-1, 450-2), which is in particular equipped with a ferromagnetic component.

7. Transport system according to one of the preceding claims, further comprising a plurality of sensors installed along the transport track,
wherein the control and/or regulating unit is further configured to determine a position of the transport element (110; 210; 410) in the intake of the passive track switch (100) by means of the plurality of sensors.

8. Transport system according to claim 7, wherein the plurality of sensors is installed along the main track in such a way that the control and/or regulating unit can determine the position of the transport element (110; 210; 410) in the intake of the passive track switch (100) along the main track.

9. Transport system according to claim 7 or 8, wherein the control and/or regulating unit is further configured to distribute a flux of transport elements (110; 210; 410) at the passive track switch (100) by switching the passive track switch according to the recorded identification units of the transport elements.

10. Method for switching a passive track switch (100) of a transport system having a transport track and at least one transport element (110; 210; 410) which is movably arranged on the transport track,
wherein the passive track switch (100) comprises a main track and first and second diverging side tracks of the transport track;
wherein the transport track comprises the following elements in the region of the passive track switch (100):
a first guide rail (140-1; 240-1; 440-1; 540-1),
a second guide rail (140-2; 240-2, 440-2; 540-2) opposite the first guide rail in the region of the main track,
a first linear-motor string (150-1; 250-1; 350-1; 450-1) arranged in parallel with the first guide rail and
a second linear-motor string (150-2; 250-2; 350-2; 450-2) arranged in parallel with the second guide rail;
wherein the first guide rail and the first linear-motor string are arranged along the first diverging side track and the main track, and the second guide rail and the second linear-motor string are arranged along the second diverging side track and the main track;
wherein the first and the second guide rail (140-1, 140-2; 240-1, 240-2; 440-1, 440-2; 540-1, 540-2) are stationary in the region of the passive track switch;
wherein at least one identification recording device for recording a respective identification unit of the transport element (110; 210; 410) is installed in the intake of the passive track switch (100) along the main track; and
wherein the method comprises the following steps:
moving the transport element (110; 210; 410) along the main track towards a branching region of the passive track switch (100) by at least one permanent magnet and/or non-switching electromagnet (271, 272; 471, 472), which is preferably oriented transversely to the transport track and which is arranged on a reaction element (270; 370; 470) of the transport element, interacting with the first and the second linear-motor string;
recording the identification unit of the transport element by means of the identification recording device; and
guiding the transport element (110; 210; 410) located in the branching region of the passive track switch in the direction of the first diverging side track by means of the first linear-motor string or in the direction of the second diverging side track by means of the second linear-motor string.

11. Method according to claim 10, wherein the transport element (110; 210; 410) is led, according to the recorded identification unit, into the first or the second side track through switching of the passive track switch (100).

12. Method according to claim 10 or 11, further comprising automatically determining a loading state of the transport element (110; 210; 410) based on the recorded identification unit.

13. Method according to claim 12, wherein the reaction element (270; 370; 470) comprises at least one non-switching electromagnet (271, 272; 471, 472), and
wherein a current strength through the at least one non-switching electromagnet (271, 272; 471, 472) is controlled in such a way that the loaded transport element (110; 210; 410) can be held on the guide rail (140-1, 140-2; 240-1, 240-2; 440-1, 440-2; 540-1, 540-2) that belongs to the linear motor string on the side of the side track in whose direction the transport element is to be guided, due to the magnetic attraction force between the magnets (271, 272; 471, 472) of the reaction element (270; 370; 470) and the respective linear motor string (150-1, 150-2; 250-1, 250-2; 350-1, 350-2; 450-1, 450-2), which is in particular equipped with a ferromagnetic component.

14. Method according to one of claims 10 to 13, wherein in addition, a position of the transport element (110; 210; 410) in the intake of the passive track switch (100) along the main track is determined by means of a plurality of sensors installed along the main track; and
wherein in particular, a flux of transport elements (110; 210; 410) is distributed at the passive track switch (100) by switching the passive track switch (100) according to the recorded identification units of the transport elements.

15. Use of a transport element (110; 210; 410) having an identification unit in a transport system having a transport track with a passive track switch (100),
wherein the transport element (110; 210; 410) is movably arranged on the transport track;
wherein the transport element (110; 210; 410) comprises a reaction element (270; 370; 470) having at least one permanent magnet and/or non-switching electromagnet (271, 272; 471, 472), preferably oriented transversely to the transport track,
wherein the transport element (110; 210; 410) can be moved along the transport track by the permanent magnet and/or non-switching electromagnet interacting with the first and/or second linear-motor string,
wherein the passive track switch (100) comprises a main track and first and second diverging side tracks;
wherein the transport track comprises the following elements in the region of the passive track switch (100):
a first guide rail (140-1; 240-1; 440-1; 540-1),
a second guide rail (140-2; 240-2, 440-2; 540-2) opposite the first guide rail in the region of the main track,
a first linear-motor string (150-1; 250-1; 350-1; 450-1) arranged in parallel with the first guide rail and
a second linear-motor string (150-2; 250-2; 350-2; 450-2) arranged in parallel with the second guide rail;
wherein the first and the second guide rail are stationary in the region of the passive track switch (100); and
wherein at least one identification recording device for recording the identification unit of the transport element is installed in the intake of the passive track switch (100) along the main track.

## Revendications

1. Dispositif de transport comprenant :
une voie de transport ayant au moins un aiguillage passif (100); et
au moins un élément de transport (110; 210; 410), qui est disposé de manière mobile sur la voie de transport;
où l'aiguillage passif (100) comprend une voie principale et des première et seconde voies secondaires divergentes;
dans lequel la voie de transport comprend les éléments suivants dans la zone de l'aiguillage passif (100):
un premier rail de guidage (140-1; 240-1; 440-1; 540-1),
un second rail de guidage (140-2; 240-2; 440-2; 540-2) opposé au premier rail de guidage dans la zone de la voie principale,
un premier train de moteur (150-1; 250-1; 350-1; 450-1) disposé parallèlement au premier rail de guidage, et
un second train de moteur (150-2; 250-2; 350-2; 450-2) disposé parallèlement au second rail de guidage ;
dans lequel l'élément de transport (110; 210; 410) comporte un élément de réaction (270; 370; 470) avec au moins un aimant permanent et/ou un électroaimant non commutable (271, 272; 471, 472) dirigé de préférence transversalement au trajet de transport,
dans lequel l'élément de transport (110; 210; 410) est mobile le long du trajet de transport par interaction de l'aimant permanent et/ou de l'électroaimant non commutable avec le premier et/ou le second trains de moteur linéaires,
dans lequel les premier et secondrails de guidage sont fixés dans la zone de l'aiguillage passif (100)
dans lequel au moins un dispositif de détection d'identification pour détecter une unité d'identification correspondante de l'élément de transport est disposé dans l'entrée de l'aiguillage passif (100) le long de la voie principale.

2. Dispositif de transport selon la revendication 1, comprenant en outre une unité de commande et/ou de régulation, dans lequel l'unité de commande et/ou de régulation est conçue pour alimenter l'élément de transport (110; 210; 410) vers la première ou la seconde voie secondaire en fonction de l'unité d'identification détectée en commutant l'interrupteur passif (100).

3. Dispositif de transport selon les revendications 1 ou 2, dans lequel chaque élément de transport (110; 210; 410) possède une unité d'identification unique.

4. Dispositif de transport selon la revendication 3, dans lequel l'unité d'identification comprend un code à barres, une puce mémoire lisible ou un code alphanumérique imprimé, collé et/ou gravé.

5. Dispositif de transport selon l'une des revendications 2 à 4, dans lequel l'unité de commande et/ou de régulation est en outre conçue pour déterminer automatiquement un état de chargement de l'élément de transport (110; 210; 410) sur la base de l'unité d'identification détectée.

6. Dispositif de transport selon la revendication 5,
dans lequel l'élément de réaction (270 ; 370 ; 470) comprend au moins un électroaimant non commutable (271, 272 ; 471, 472), et
dans lequel l'unité de commande et/ou de régulation est en outre conçue pour réguler une intensité de courant par l'intermédiaire d'au moins un électroaimant non commutable de telle sorte que l'élément de transport chargé (110; 210; 410) soit déplacé entre les aimants (271, 272; 471, 472) de l'élément de réaction et le train de moteur linéaire (150-1, 150-2; 250-1, 250-2; 350-1, 350-2; 450-1, 450-2) du côté de la voie secondaire dans la direction de laquelle l'élément de transport (110; 210; 410) doit être guidé, sur le rail de guidage (140-1, 140-2; 240-1, 240-2; 440-1, 440-2; 540-1, 540- 2) appartenant au train de moteur linéaire correspondant.

7. Dispositif de transport selon l'une des revendications précédentes, comprenant en outre une pluralité de capteurs disposés le long du trajet de transport,
dans lequel l'unité de commande et/ou de régulation est en outre configurée pour déterminer une position de l'élément de transport (110; 210; 410) dans l'alimentation du commutateur passif (100) au moyen de la pluralité de capteurs.

8. Dispositif de transport selon la revendication 7, dans lequel la pluralité de capteurs est disposée le long de la voie principale de telle sorte que l'unité de commande puisse déterminer la position de l'élément de transport (110; 210; 410) dans l'alimentation de l'aiguillage passif (100) le long de la voie principale.

9. Dispositif de transport selon les revendications 7 ou 8, dans lequel l'unité de commande est en outre conçue pour diviser un flux d'éléments de transport (110; 210; 410) au niveau du commutateur passif (100) en commutant le commutateur passif en fonction des unités d'identification détectées des éléments de transport.

10. Procédé pour commuter un aiguillage passif (100) d'un dispositif de transport avec une voie de transport et au moins un élément de transport (110; 210; 410) qui est disposé de manière mobile sur la voie de transport;
dans lequel l'aiguillage passif (100) comprend une voie principale et des première et seconde voies secondaires divergentes de la voie de transport;
dans lequel la voie de transport comprend les éléments suivants dans la zone de l'aiguillage passif (100):
un premier rail de guidage (140-1; 240-1; 440-1; 540-1),
un second rail de guidage (140-2; 240-2; 440-2; 540-2) opposé au premier rail de guidage dans la zone de la voie principale,
un premier train de moteur (150-1; 250-1; 350-1; 450-1) disposé parallèlement au premier rail de guidage, et
un second train de moteur (150-2; 250-2; 350-2; 450-2) disposé parallèlement au second rail de guidage;
dans lequel le premier rail de guidage et le premier train de moteur linéaire sont disposés le long de la première voie secondaire divergente et de la voie principale, et le second rail de guidage et le second train de moteur linéaire sont disposés le long de la seconde voie secondaire divergente et de la voie principale;
dans lequel les premier et second rails de guidage (140-1, 140-2; 240-1, 240-2; 440-1, 440-2; 540-1, 540-2) sont fixés dans la zone de l'aiguillage passif;
dans lequel au moins un dispositif de détection d'identification pour détecter une unité d'identification correspondante de l'élément de transport (110; 210; 410) est disposé dans l'alimentation de l'aiguillage passif (100) le long de la voie principale;
le procédé comprenant les étapes suivantes:
déplacement de l'élément de transport (110; 210; 410) le long de la voie principale vers une zone de dérivation de l'interrupteur passif (100) par interaction d'au moins un aimant permanent et/ou un électroaimant non commutable (271, 272; 471, 472), de préférence dirigé transversalement à la voie de transport, qui est disposé sur un élément de réaction (270; 370; 470) de l'élément de transport, avec le premier et le second trains de moteur linéaires;
la détection de l'unité d'identification de l'élément de transport au moyen du dispositif de détection d'identification; et
le guidage de l'élément de transport (110; 210; 410) situé dans la zone de bifurcation de l'aiguillage passif en direction de la première voie secondaire divergente au moyen du premier train de moteur linéaire ou en direction de la seconde voie secondaire divergente au moyen du second train de moteur linéaire.

11. Procédé selon la revendication 10, dans lequel l'élément de transport (110; 210; 410) est amené à la première ou à la seconde voie secondaire par la commutation de l'aiguillage passif (100), en fonction de l'unité d'identification détectée.

12. Procédé selon les revendications 10 ou 11, comprenant en outre la détermination automatique d'une condition de chargement de l'élément de transport (110; 210; 410) sur la base de l'unité d'identification détectée.

13. Procédé selon la revendication 12, dans lequel l'élément de réaction (270; 370; 470) comprend au moins un électroaimant non commutable (271, 272; 471, 472), et
dans lequel une intensité de courant est contrôlée par au moins un électroaimant non commutable (271, 272; 471, 472) de telle sorte que l'élément de transport chargé (110; 210; 410) est déplacé par la force d'attraction magnétique entre les aimants (271, 272; 471, 472) de l'élément de réaction (270; 370; 470) et de la ligne de moteur linéaire (150-1, 150-2; 250-1, 250-2; 350-1, 350-2; 450-1, 450-2), en particulier équipée d'un composant ferromagnétique, du côté de la ligne secondaire en direction de laquelle l'élément de transport est guidé, au niveau du rail de guidage (140-1, 140-2; 240-1, 240-2; 440-1, 440-2; 540-1,540-2) appartenant au train à moteur linéaire correspondant.

14. Procédé selon l'une quelconque des revendications 10 à 13, comprenant en outre la détermination d'une position de l'élément de transport (110; 210; 410) dans l'alimentation du commutateur passif (100) le long du trajet principal avec une pluralité de capteurs disposés le long du trajet principal; et
en particulier, un flux d'éléments de transport (110; 210; 410) est divisé à la surface passive (100) en commutant le commutateur passif (100) en fonction des unités d'identification détectées des éléments de transport.

15. Utilisation d'un élément de transport (110; 210; 410) avec une unité d'identification dans un dispositif de transport avec une voie de transport avec au moins un aiguillage passif (100);
dans lequel l'élément de transport (110; 210; 410) est disposé de manière mobile ur la voie de transport;
dans lequel l'élément de transport (110; 210; 410) comporte un élément de réaction (270; 370; 470) avec au moins un aimant permanent et/ou un électroaimant non commutable (271, 272; 471, 472) dirigé de préférence transversalement au trajet de transport,
dans lequel l'élément de transport (110; 210; 410) est mobile le long du trajet de transport par interaction de l'aimant permanent et/ou de l'électroaimant non commutable avec le premier et/ou le second trains de moteur linéaires,
où l'aiguillage passif (100) comprend une voie principale et des première et seconde voies secondaires divergentes;
dans lequel la voie de transport dans la zone du commutateur passif (100) comprend les éléments suivants:
un premier rail de guidage (140-1; 240-1; 440-1; 540-1),
un second rail de guidage (140-2; 240-2; 440-2; 540-2) opposé au premier rail de guidage dans la zone de la voie principale,
un premier train de moteur linéaire (150-1; 250-1; 350-1; 450-1) disposé parallèlement au premier rail de guidage, et
un second train de porte linéaire (150-2; 250-2; 350-2; 450-2) disposé parallèlement au second rail de guidage;
dans lequel les premier et second rails de guidage sont fixés dans la zone de l'aiguillage passif (100),
dans lequel au moins un dispositif de détection d'identification pour détecter l'unité d'identification de l'élément de transport est disposé dans l'entrée de l'aiguillage passif (100) le long de la voie principale.
